(19) **Europäisches Patentamt / European Patent Office / Office européen des brevets**

(11) **EP 4 364 483 B1**

(12) # FASCICULE DE BREVET EUROPEEN

(45) Date de publication et mention de la délivrance du brevet:
**21.05.2025  Bulletin 2025/21**

(21) Numéro de dépôt: **22737812.2**

(22) Date de dépôt: **21.06.2022**

(51) Classification Internationale des Brevets (IPC):
**H04W 64/00** *(2009.01)*

(52) Classification Coopérative des Brevets (CPC):
**H04W 64/00**

(86) Numéro de dépôt international:
**PCT/EP2022/066804**

(87) Numéro de publication internationale:
**WO 2023/274778 (05.01.2023 Gazette 2023/01)**

(54) **FIABILISATION DE LA GÉOLOCALISATION D'UN TERMINAL À PARTIR D'UN OU PLUSIEURS IDENTIFIANTS DE DISPOSITIFS ÉMETTEURS VOISINS**

**ERHÖHUNG DER ZUVERLÄSSIGKEIT DER ORTUNG EINES TERMINALS BASIEREND AUF EINEM ODER MEHREREN KENNUNGEN VON NAH GELEGENEN SENDEGERÄTEN**

**INCREASING RELIABILITY OF POSITIONS OF A TERMINAL BASED ON ONE OR SEVERAL IDENTIFIERS OF NEARBY TRANSMITTERS**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.06.2021  FR 2106964**

(43) Date de publication de la demande:
**08.05.2024  Bulletin 2024/19**

(73) Titulaire: **UNABIZ**
**31670 Labège (FR)**

(72) Inventeurs:
  • **ISSON, Olivier**
    **31650 Lauzerville (FR)**
  • **MARTY, Renaud**
    **31520 Ramonville Saint Agne (FR)**
  • **ZUNIGA, Juan Carlos**
    **Montreal, Québec H4L 3J4 (CA)**
  • **BOITE, Julien**
    **31570 Lanta (FR)**

(74) Mandataire: **Ipside**
    **6, Impasse Michel Labrousse**
    **31100 Toulouse (FR)**

(56) Documents cités:
**US-A1- 2004 203 885     US-A1- 2011 250 903
US-A1- 2014 155 086**

EP 4 364 483 B1

**Description**

**Domaine de l'invention**

La présente invention appartient au domaine de la géolocalisation d'un terminal d'un système de communication sans fil. La géolocalisation du terminal est mise en œuvre à partir d'un ou plusieurs identifiants de dispositifs émetteurs voisins détectés par le terminal et à l'aide d'un serveur de géolocalisation comportant une base de données faisant l'association entre des dispositifs émetteurs et leur position géographique.

**Etat de la technique**

Il existe actuellement plusieurs systèmes de géolocalisation basés sur une base de données faisant l'association entre un identifiant d'un dispositif émetteur (par exemple un point d'accès WiFi ou Bluetooth, ou une étiquette RFID) avec la position géographique du dispositif émetteur.

Dans un tel système de géolocalisation, un terminal détecte, pour au moins un dispositif émetteur, un identifiant du dispositif émetteur à partir d'un message émis par le dispositif émetteur, par exemple sur un signal balise. Le terminal envoie ensuite un message d'interrogation à un serveur de géolocalisation. Le message d'interrogation comporte l'identifiant du dispositif émetteur. Le serveur de géolocalisation comporte une base de données de géolocalisation faisant l'association entre des identifiants de dispositifs émetteurs et leurs positions géographiques respectives. Le serveur de géolocalisation peut alors déterminer la position géographique associée audit dispositif émetteur, puis envoyer cette information au terminal dans un message de réponse. La position géographique du dispositif émetteur correspond à une position géographique estimée du terminal.

La position géographique du terminal peut éventuellement être affinée en fonction d'un niveau de puissance avec lequel le signal balise est reçu par le terminal. Il est également possible d'estimer la position géographique du terminal en fonction de la position géographique de plusieurs dispositifs émetteurs différents dont le terminal a reçu le signal balise à un instant donné.

La position géographique d'un dispositif émetteur peut toutefois changer au cours du temps. Lorsque c'est le cas, la base de données de géolocalisation doit être mise à jour pour que l'association entre l'identifiant et la position géographique du dispositif émetteur reste correcte. Si l'association entre l'identifiant et la position géographique du dispositif émetteur n'est pas correcte dans la base de données de géolocalisation, alors une estimation de la position géographique du terminal basée sur ledit identifiant est faussée.

Les campagnes de mise à jour d'une base de données de géolocalisation sont particulièrement coûteuses, et la fréquence à laquelle elles sont effectuées est parfois insuffisante pour garantir une fiabilité satisfaisante dans la géolocalisation d'un terminal. En outre, ces campagnes de mise à jour sont rarement exhaustives.

Il peut également arriver que deux dispositifs émetteurs différents localisés à des positions géographiques différentes partagent le même identifiant. La base de données de géolocalisation peut faire l'association entre ledit identifiant et une seule desdites deux positions géographiques. Cette association sera correcte dans certains cas d'utilisation, notamment pour les terminaux qui se trouvent à portée du dispositif émetteur dont la position géographique est celle mémorisée dans la base de données de géolocalisation. Cette association sera en revanche incorrecte dans d'autres cas d'utilisation, notamment pour les terminaux qui se trouvent à portée de l'autre dispositif émetteur dont la position géographique n'est pas mémorisée dans la base de données de géolocalisation. Selon le cas, une estimation de la position géographique du terminal basée sur ledit identifiant pourra être faussée. Le demande de brevet US2011/250903 montre un procédé de géolocalisation d'un terminal basé sur des identifiants et ayant des informations de fiabilité.

Plusieurs bases de données de géolocalisation différentes sont parfois disponibles pour estimer la position géographique d'un terminal (différentes bases de données gérées par des fournisseurs de service différents). Il n'existe toutefois actuellement pas de solution permettant de déterminer, au cas par cas, quelle base de données devrait être utilisée pour obtenir la meilleure estimation de la position du terminal.

Il convient donc de trouver une solution satisfaisante pour fiabiliser la géolocalisation d'un terminal à partir d'un ou plusieurs identifiants de dispositifs émetteurs voisins détectés par le terminal.

**Exposé de l'invention**

La présente invention a pour objectif de remédier à tout ou partie des inconvénients de l'art antérieur, notamment ceux exposés ci-avant, en proposant une solution pour fiabiliser la géolocalisation d'un terminal à partir d'un ou plusieurs identifiants de dispositifs émetteurs voisins.

A cet effet, et selon un premier aspect, il est proposé par la présente invention, un procédé de géolocalisation d'un terminal d'un système de communication sans fil. Le terminal est adapté à échanger des messages avec un réseau d'accès dudit système de communication sans fil selon un premier protocole de communication sans fil. Le procédé comporte :

- une détection (101), par le terminal, pour au moins un dispositif émetteur, d'un identifiant dudit dispositif émetteur à partir d'un message émis par ledit dispositif émetteur selon un second protocole de communication sans fil,
- une émission (102), par le terminal, à destination du réseau d'accès, selon le premier protocole de communication sans fil, d'au moins un message comportant un ou plusieurs identifiants détectés,
- une détermination (106), par le réseau d'accès, d'une position géographique du terminal en émettant une requête comprenant au moins un des identifiants reçus à un serveur de géolocalisation mémorisant une base de données de géolocalisation comportant une liste d'identifiants de dispositifs émetteurs et les positions géographiques respectives desdits dispositifs émetteurs, ladite requête étant définie à l'aide d'une base de données, dite « base de données de fiabilité des identifiants », permettant d'associer à un identifiant quelconque au moins une valeur représentative de la fiabilité dudit identifiant pour ledit serveur de géolocalisation, la base de données de fiabilité des identifiants étant mémorisée par un ou plusieurs serveurs distincts du serveur de géolocalisation.

Il convient de noter que, dans la présente demande, l'expression « position géographique » d'un objet (terminal ou dispositif émetteur) peut correspondre, de manière large, à une information de position représentative de la position géographique exacte dudit objet. Ainsi, il peut s'agir directement des coordonnées (longitude, latitude et éventuellement altitude) d'une position géographique, mais il peut aussi s'agir d'une information contextuelle permettant d'estimer la position géographique exacte de l'objet (comme par exemple une adresse postale, un nom de magasin, un nom de quartier, de région ou de pays, etc).

L'invention repose sur le fait qu'une base de données distincte de la base de données de géolocalisation renseigne sur une valeur de fiabilité associée à chacun des identifiants détectés par le terminal.

Dans la base de données de fiabilité des identifiants, une valeur de fiabilité est associée à un identifiant et à un serveur de géolocalisation. La valeur de fiabilité est représentative de la confiance que l'on peut accorder à cet identifiant pour pouvoir géolocaliser précisément le terminal à l'aide de cet identifiant avec ledit serveur de géolocalisation. La base de données de fiabilité des identifiants peut être construite pour renseigner sur la fiabilité des identifiants relativement à un seul serveur de géolocalisation, ou bien relativement à plusieurs serveurs de géolocalisation différents.

Il convient toutefois de noter qu'une valeur de fiabilité d'un identifiant peut également être pondérée en fonction de critères additionnels, comme par exemple un coût de service du serveur de géolocalisation associé.

Cela peut ainsi notamment permettre de filtrer les identifiants à prendre en compte dans l'estimation de la position géographique du terminal à l'aide de la base de données de géolocalisation, en fonction des valeurs de fiabilité des identifiants. Par exemple, une valeur de fiabilité faible est attribuée dans la base de données de fiabilité aux identifiants pour lesquels la position géographique associée dans la base de données de géolocalisation est jugée erronée ; les identifiants présentant une valeur de fiabilité trop faible ne seront pas pris en compte pour l'estimation de la position géographique du terminal.

Alternativement ou en complément, et lorsque plusieurs serveurs de géolocalisation différents sont considérés, les valeurs de fiabilité peuvent permettre de sélectionner le serveur de géolocalisation qui semble le plus fiable pour géolocaliser le terminal parmi une pluralité de serveurs de géolocalisation. Cette sélection peut même avoir lieu en utilisant des valeurs de fiabilité associées à des identifiants qui sont différents des identifiants détectés par le terminal. Ainsi, le terme « identifiant quelconque » doit être compris comme pouvant correspondre aussi bien à un identifiant compris dans l'ensemble des identifiants détectés et remontés par le terminal que l'on cherche à géolocaliser, qu'à un identifiant qui ne fait pas partie de cet ensemble des identifiants détectés et remontés par le terminal.

Ainsi, la base de données de fiabilité est utilisée pour déterminer le serveur de géolocalisation à utiliser et/ou pour sélectionner les identifiants qu'il convient d'inclure dans la requête (c'est-à-dire pour définir le destinataire et/ou le contenu de la requête).

Dans des modes particuliers de mise en œuvre, l'invention peut comporter en outre l'une ou plusieurs des caractéristiques suivantes, prises isolément ou selon toutes les combinaisons techniquement possibles.

Dans des modes particuliers de mise en œuvre, la détermination de la position géographique du terminal comporte :

- une détermination, par le réseau d'accès, à l'aide de la base de données de fiabilité des identifiants, pour au moins un des identifiants reçus, d'une valeur de fiabilité pour ledit identifiant,
- lorsque ledit au moins un des identifiants reçus présente une valeur de fiabilité satisfaisante, une estimation d'une position géographique du terminal à partir dudit identifiant avec le serveur de géolocalisation.

Dans des modes particuliers de mise en œuvre, la valeur de fiabilité de chaque identifiant parmi les identifiants reçus est comparée à une valeur seuil pour déterminer si l'identifiant doit ou non être utilisé pour l'estimation de la position géographique du terminal à l'aide du serveur de géolocalisation.

Les modes particuliers suivants de mise en œuvre du procédé ne font pas partie des revendications.

Dans des modes particuliers de mise en œuvre, un nombre maximal prédéterminé d'identifiants parmi les identifiants reçus présentant les meilleures valeurs de fiabilité sont utilisés pour l'estimation de la position géographique du terminal à l'aide du serveur de géolocalisation.

Dans des modes particuliers de mise en œuvre, le procédé comporte en outre, lorsqu'aucun des identifiants reçus ne présente une valeur de fiabilité satisfaisante, une estimation d'une position géographique approximative du terminal sans l'aide du serveur de géolocalisation.

Dans des modes particuliers de mise en œuvre, la base de données de fiabilité des identifiants comporte, pour ledit au moins un des identifiants reçus, une position géographique approximative du dispositif émetteur portant ledit identifiant, ladite position géographique approximative ayant été préalablement déterminée sans l'aide du serveur de géolocalisation. L'estimation de la position géographique approximative du terminal est alors effectuée en fonction de la position géographique approximative associée audit identifiant.

Dans des modes particuliers de mise en œuvre, ledit au moins un des identifiants reçus est associé, dans la base de données de fiabilité des identifiants, à plusieurs valeurs de fiabilité chacune associée à une valeur différente d'une information de discrimination (le terme « clé de discrimination » pourrait également être utilisé à la place du terme « information de discrimination », tout en ayant la même signification).

Dans des modes particuliers de mise en œuvre, une valeur de l'information de discrimination est déterminée par le réseau d'accès à partir dudit au moins un message reçu du terminal, et le procédé de géolocalisation comporte, pour ledit au moins un des identifiants reçus, une obtention d'une valeur de fiabilité à prendre en compte pour l'estimation de la position géographique du terminal à partir de ladite valeur de l'information de discrimination.

Dans des modes particuliers de mise en œuvre, l'information de discrimination permet d'identifier un serveur de géolocalisation, et le procédé de géolocalisation comporte une sélection du serveur de géolocalisation à utiliser pour l'estimation de la position géographique du terminal en fonction des différentes valeurs de fiabilité dudit au moins un des identifiants reçus.

Dans des modes particuliers de mise en œuvre, un identifiant quelconque peut être associé, dans la base de données de fiabilité des identifiants, à plusieurs valeurs de fiabilité chacune associée à une valeur différente d'une information de discrimination, et le procédé de géolocalisation comporte :

- une détermination, par le réseau d'accès, d'une valeur de l'information de discrimination à partir dudit au moins un message reçu du terminal,
- une détermination de plusieurs valeurs de fiabilité associées à ladite valeur d'information de discrimination dans la base de données de fiabilité des identifiants,
- un calcul d'une valeur agrégée de fiabilité, pour chacun d'une pluralité de serveurs de géolocalisation, à partir des valeurs de fiabilité ainsi déterminées,
- une sélection du serveur de géolocalisation à utiliser pour l'estimation de la position géographique du terminal en fonction des valeurs agrégées calculées.

Dans des modes particuliers de mise en œuvre, le premier protocole de communication sans fil est un protocole de communication d'un réseau étendu sans fil ou d'un réseau étendu sans fil à basse consommation, et le deuxième protocole de communication sans fil est un protocole de communication d'un réseau local sans fil, un protocole de communication d'un réseau personnel sans fil ou un protocole de communication à courte distance.

Selon un deuxième aspect, la présente invention concerne un procédé pour mettre à jour une base de données de fiabilité des identifiants telle que définie dans l'un quelconque des modes de mise en œuvre précédents. Le procédé comporte :

- une détection, par un terminal, pour au moins un dispositif émetteur, d'un identifiant dudit dispositif émetteur à partir d'un message émis par ledit dispositif émetteur selon le second protocole de communication sans fil,
- une émission, par le terminal, à destination du réseau d'accès, selon le premier protocole de communication sans fil, d'un message comportant ledit identifiant,
- une estimation d'une position géographique du terminal à l'aide d'un serveur (50) de géolocalisation à partir dudit identifiant,
- une détermination, sans utiliser le serveur de géolocalisation, d'une position géographique approximative du terminal,
- une vérification de cohérence, entre la position géographique approximative du terminal et la position géographique du terminal estimée à l'aide du serveur (50) de géolocalisation,
- une mise à jour de la base de données de fiabilité des identifiants pour ledit identifiant en fonction du résultat de la vérification de cohérence.

Dans des modes particuliers de mise en œuvre, l'invention peut comporter en outre l'une ou plusieurs des caractéristiques suivantes, prises isolément ou selon toutes les combinaisons techniquement possibles.

Dans des modes particuliers de mise en œuvre, la vérification de cohérence comporte un calcul d'une distance entre la position géographique approximative du terminal et la position géographique associée audit identifiant dans la base de données de géolocalisation.

Dans des modes particuliers de mise en œuvre, la mise à jour comporte un calcul d'une nouvelle valeur de fiabilité en fonction d'une distance entre la position géographique approximative du terminal et la position géographique associée audit identifiant dans la base de données de géolocalisation.

Dans des modes particuliers de mise en œuvre, la nouvelle valeur de fiabilité est calculée en outre en fonction d'une valeur de fiabilité précédemment attribuée audit identifiant dans la base de données de fiabilité des identifiants.

Dans des modes particuliers de mise en œuvre, la base de données de fiabilité des identifiants comporte, pour ledit identifiant, une date de dernière mise à jour de la valeur de fiabilité, et la nouvelle valeur de fiabilité est calculée en outre en fonction d'une date courante et de la date de dernière mise à jour de la valeur de fiabilité dudit identifiant.

Dans des modes particuliers de mise en œuvre, le procédé de mise à jour comporte en outre une détermination d'une position géographique approximative du dispositif émetteur portant ledit identifiant, sans l'aide du serveur de géolocalisation, et une association de ladite position géographique approximative du dispositif émetteur avec ledit identifiant dans la base de données de fiabilité des identifiants.

Selon un troisième aspect, la présente invention concerne un serveur d'un réseau d'accès d'un système de communication sans fil. Ledit système comporte au moins un terminal adapté à échanger des messages avec le réseau d'accès selon un premier protocole de communication sans fil et à recevoir un message émis par un dispositif émetteur selon un second protocole de communication sans fil. Ledit serveur est configuré pour :

- recevoir du terminal au moins un message comportant au moins un identifiant d'un dispositif émetteur détecté par ledit terminal,
- déterminer une position géographique du terminal en émettant une requête comprenant au moins un des identifiants reçus à un serveur de géolocalisation mémorisant une base de données de géolocalisation comportant une liste d'identifiants de dispositifs émetteurs et les positions géographiques respectives desdits dispositifs émetteurs, ladite requête étant définie à l'aide d'une base de données, dite « base de données de fiabilité des identifiants », permettant d'associer à un identifiant quelconque au moins une valeur représentative de la fiabilité dudit identifiant pour ledit serveur de géolocalisation, la base de données de fiabilité des identifiants étant mémorisée par un ou plusieurs serveurs distincts du serveur de géolocalisation.

Le serveur est configuré pour mettre en œuvre l'un quelconque des modes de mise en œuvre précédemment décrits du procédé de géolocalisation, et/ou l'un quelconque des modes de mise en œuvre précédemment décrits du procédé de mise à jour de la base de fiabilité des identifiants. En particulier, le serveur peut comporter en outre l'une ou plusieurs des caractéristiques suivantes, prises isolément ou selon toutes les combinaisons techniquement possibles.

Dans des modes particuliers de réalisation, le serveur est configuré pour :

- déterminer, pour au moins un des identifiants reçus, une valeur de fiabilité à l'aide de la base de données de fiabilité des identifiants,
- lorsqu'au moins un des identifiants reçus présente une valeur de fiabilité satisfaisante, estimer une position géographique du terminal à partir dudit identifiant avec le serveur de géolocalisation.

Dans des modes particuliers de réalisation, le serveur est en outre configuré, lorsqu'aucun des identifiants reçus ne présente une valeur de fiabilité satisfaisante, pour estimer une position géographique approximative du terminal sans l'aide du serveur de géolocalisation.

Dans des modes particuliers de réalisation, le serveur est en outre configuré pour estimer la position géographique approximative du terminal à partir, pour au moins un des identifiants reçus, d'une position géographique approximative du dispositif émetteur portant ledit identifiant, ladite position géographique approximative du dispositif émetteur ayant été préalablement déterminée par le serveur sans l'aide du serveur de géolocalisation et mémorisée dans la base de données de fiabilité des identifiants.

Dans des modes particuliers de réalisation, ledit au moins un des identifiants reçus est associé, dans la base de données de fiabilité des identifiants, à plusieurs valeurs de fiabilité associée chacune à une valeur différente d'une information de discrimination permettant d'identifier un serveur de géolocalisation, et ledit serveur est en outre configuré pour sélectionner, en fonction des différentes valeurs de fiabilité associées audit identifiant, le serveur de géolocalisation à utiliser pour estimer la position géographique du terminal.

Dans des modes particuliers de réalisation, un identifiant quelconque peut être associé, dans la base de données de fiabilité des identifiants, à plusieurs valeurs de fiabilité chacune associée à une valeur différente d'une information de discrimination, et le serveur est configuré pour :

- déterminer une valeur de l'information de discrimination à partir dudit au moins un message reçu du terminal,
- déterminer plusieurs valeurs de fiabilité associées à ladite valeur d'information de discrimination dans la base de données de fiabilité des identifiants,
- calculer une valeur agrégée de fiabilité, pour chacun d'une pluralité de serveurs de géolocalisation, à partir des valeurs de fiabilité ainsi déterminées,
- sélectionner le serveur de géolocalisation à utiliser pour l'estimation de la position géographique du terminal en fonction des valeurs agrégées calculées.

Dans des modes particuliers de réalisation, le serveur est en outre configuré pour :

- déterminer une position géographique approximative du terminal sans utiliser le serveur de géolocalisation,
- vérifier une cohérence entre la position géographique approximative du terminal et la position géographique du terminal estimée à l'aide du serveur de géolocalisation,
- mettre à jour la base de données de fiabilité des identifiants pour au moins un des identifiants reçus en fonction du résultat de la vérification de cohérence

Dans des modes particuliers de réalisation, le serveur est en outre configuré pour calculer, pour au moins un des identifiants reçus, une nouvelle valeur de fiabilité en fonction d'une distance entre la position géographique approximative du terminal et la position géographique associée audit identifiant dans la base de données de géolocalisation.

Selon un quatrième aspect, la présente invention concerne un réseau d'accès comportant un serveur de réseau d'accès selon l'un quelconque des modes de réalisation précédents.

Dans des modes particuliers de réalisation, ledit réseau d'accès est un réseau étendu sans fil ou un réseau étendu sans fil à basse consommation.

## Présentation des figures

L'invention sera mieux comprise à la lecture de la description suivante, donnée à titre d'exemple nullement limitatif, et faite en se référant aux figures 1 à 6 qui représentent :

[Fig. 1] une représentation schématique d'un exemple de réalisation d'un système de communication sans fil utilisé pour géolocaliser un terminal à l'aide d'un serveur de géolocalisation,
[Fig. 2] une représentation schématique d'un exemple de réalisation d'un terminal,
[Fig. 3] une représentation schématique des principales étapes d'un procédé de géolocalisation selon l'invention,
[Fig. 4] une représentation schématique des principales étapes d'un mode particulier de mise en œuvre du procédé de géolocalisation,
[Fig. 5] une illustration d'un exemple de mise en œuvre du procédé de géolocalisation,
[Fig. 6] un exemple de structure possible pour une base de données de fiabilité des identifiants,
[Fig. 7] une représentation schématique des principales étapes d'un procédé de mise à jour d'une base de données de fiabilité des identifiants,
[Fig. 8] une représentation schématique des principales étapes d'un mode particulier de mise en œuvre du procédé de géolocalisation,
[Fig. 9] une représentation schématique des principales étapes d'un mode particulier de mise en œuvre du procédé de géolocalisation.

Dans ces figures, des références identiques d'une figure à une autre désignent des éléments identiques ou analogues. Pour des raisons de clarté, les éléments représentés ne sont pas nécessairement à une même échelle, sauf mention contraire.

## Description détaillée d'un mode de réalisation de l'invention

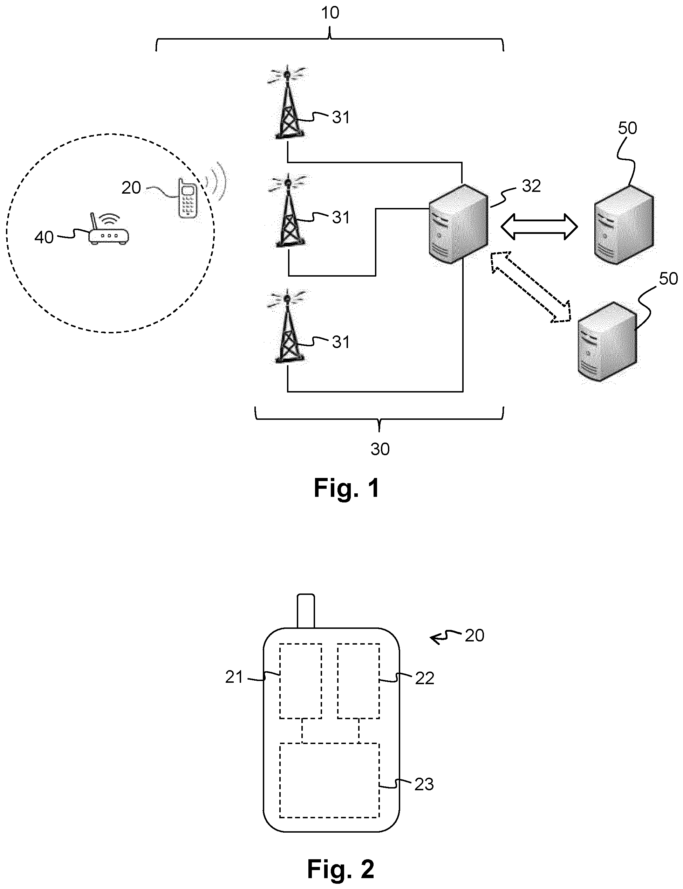

La figure 1 représente schématiquement un système 10 de communication sans fil, comportant au moins un terminal 20 et un réseau d'accès 30 comportant plusieurs stations de base 31.

Le terminal 20 est adapté à émettre des messages sur un lien montant à destination du réseau d'accès 30. Chaque station de base 31 est adaptée à recevoir les messages du terminal 20 lorsque ledit terminal se trouve à sa portée. De manière conventionnelle, un message émis par le terminal 20 comporte un identifiant du terminal 20. Chaque message reçu par une station de base est par exemple transmis à un serveur 32 du réseau d'accès 30, éventuellement accompagné d'autres informations comme un identifiant de la station de base 31 qui l'a reçu, le niveau de puissance de réception dudit message reçu, l'instant d'arrivée dudit message, la fréquence à laquelle le message a été reçu, etc. Le serveur 32 traite par exemple l'ensemble des messages reçus des différentes stations de base 31.

Le système 10 de communication sans fil peut être monodirectionnel, c'est-à-dire qu'il ne permet des échanges de messages que sur le lien montant du terminal 20 vers le réseau d'accès 30. Rien n'exclut cependant, suivant d'autres exemples, de permettre des échanges bidirectionnels. Le cas échéant, le réseau d'accès 30 est également adapté à émettre, par l'intermédiaire des stations de base 31, des messages sur un lien descendant à destination du terminal 20, lequel est adapté à les recevoir.

Les échanges de messages sur le lien montant à destination du réseau d'accès 30 utilisent un premier protocole de communication sans fil.

Dans des modes particuliers de réalisation, le premier protocole de communication sans fil est un protocole de communication de réseau étendu sans fil (« Wireless Wide Area Network » ou WWAN dans la littérature anglo-saxonne). Par exemple, le premier protocole de communication sans fil est un protocole de communication normalisé de type UMTS (« Universal Mobile Telecommunications System »), LTE (« Long Term Evolution), LTE-Advanced Pro, 5G, etc.

Alternativement, le premier protocole de communication sans fil est un protocole de communication de réseau étendu sans fil à basse consommation (« Low Power Wide Area Network » ou LPWAN dans la littérature anglo-saxonne). Un tel système de communication sans fil est un réseau d'accès à longue portée (supérieure à un kilomètre, voire même supérieure à quelques dizaines de kilomètres), à faible consommation énergétique (par exemple une consommation énergétique lors de la transmission ou de la réception d'un message inférieure à 100 mW, voire inférieure à 50 mW, voire même inférieure à 25 mW), et dont les débits sont généralement inférieurs à 1 Mbits/s. Parmi des exemples de réseaux LPWAN, on peut citer notamment Sigfox, LoRaWAN, Ingenu, Amazon Sidewalk, Helium, etc. De tels systèmes de communication sans fil sont particulièrement adaptés pour des applications de type IoT ou M2M.

Dans un système de communication de type IoT ou M2M, les échanges de données sont essentiellement monodirectionnels, en l'occurrence sur un lien montant des terminaux 20 vers le réseau d'accès 30 du système 10 de communication sans fil. Afin de minimiser les risques de perdre un message émis par un terminal 20, la planification du réseau d'accès est souvent réalisée de telle sorte qu'une zone géographique donnée est couverte simultanément par plusieurs stations de base 31, de telle manière qu'un message émis par un dispositif émetteur 20 peut être reçu par plusieurs stations de base 31.

Dans la suite de la description, on considère à titre d'exemple nullement limitatif que le premier protocole de communication sans fil est un protocole de communication de réseau étendu sans fil à basse consommation et à bande ultra étroite. Par « bande ultra étroite » (« Ultra Narrow Band » ou UNB dans la littérature anglo-saxonne), on entend que le spectre fréquentiel instantané des signaux radioélectriques émis par les terminaux est de largeur fréquentielle inférieure à deux kilohertz, voire inférieure à un kilohertz.

Tel qu'illustré par la figure 1, le terminal 20 est également adapté à recevoir des messages émis par au moins un dispositif émetteur 40, qui se trouve au voisinage dudit terminal 20. Les messages émis par le dispositif émetteur 40 utilisent un second protocole de communication sans fil, différent du premier protocole de communication sans fil. Il est à noter que le dispositif émetteur 40 peut être entièrement indépendant du système 10 de communication sans fil, et il n'a pas besoin de supporter le premier protocole de communication sans fil.

Dans des modes particuliers de réalisation, le second protocole de communication sans fil est de portée inférieure à la portée du premier protocole de communication sans fil. Dans un tel cas, la position géographique du dispositif émetteur 40, dans la portée duquel se trouve le terminal 20, fournit une information plus précise sur la position géographique du terminal 20 que, par exemple, la position géographique d'une station de base 31 qui reçoit un message émis par le terminal 20.

Il est cependant à noter qu'il est également possible, suivant d'autres exemples, d'avoir un second protocole de communication sans fil dont la portée n'est pas inférieure à celle du premier protocole de communication sans fil.

Le second protocole de communication sans fil est par exemple un protocole de communication de réseau local sans fil (« Wireless Local Area Network » ou WLAN dans la littérature anglo-saxonne), par exemple de type WiFi (normes IEEE 802.11), etc., ou encore un protocole de communication de réseau personnel sans fil (« Wireless Personal Area Network » ou WPAN dans la littérature anglo-saxonne), par exemple de type Bluetooth ou BLE (acronyme anglais pour « Bluetooth Low Energy », « Bluetooth à basse consommation » en français), etc. Selon encore un autre exemple, le second protocole de communication sans fil peut être un protocole de communication à courte distance basé par exemple sur la technologie NFC (acronyme anglais de « Near Field Communication », « communication en champ proche » en français) ou sur la technologie RFID (acronyme anglais de « Radio Frequency Identification », « identification par radiofréquences » en français).

Un serveur 50 de géolocalisation comporte une base de données, dite « base de données de géolocalisation », comportant une table mémorisant des identifiants de dispositifs émetteurs 40. Chaque identifiant de dispositif émetteur 40 est associé dans la table à au moins une information de position représentative de la position géographique du dispositif émetteur 40.

Un identifiant d'un dispositif émetteur 40 correspond par exemple à une adresse MAC du dispositif émetteur 40 (MAC est l'acronyme anglo-saxon pour « Media Access Control », « contrôle d'accès au support » en français). D'autres paramètres pourraient toutefois jouer le rôle d'identifiant pour un dispositif émetteur 40, comme par exemple un SSID (acronyme anglais de « Service Set IDentifier », « identificateur d'ensemble de services » en français) ou un BSSID (acronyme anglais pour « Base Service Set IDentifier », « identificateur d'ensemble de services de base » en français) d'un point d'accès WiFi, un identifiant d'un point d'accès Bluetooth ou BLE, un identifiant d'une étiquette RFID, etc.

L'information de position peut être directement des coordonnées (longitude, latitude et éventuellement altitude) d'une position géographique du dispositif émetteur 40. L'information de position peut toutefois également être une information contextuelle permettant d'estimer la position géographique du dispositif émetteur 40, comme par exemple une adresse postale, un nom de magasin, un nom de quartier, de région ou de pays, etc.

Le serveur 50 de géolocalisation est par exemple connecté au serveur 32 du réseau d'accès 30 par une connexion internet.

Tel qu'illustré sur la figure 1, il est envisageable que plusieurs serveurs 50 de géolocalisation soient disponibles. Ces différents serveurs de géolocalisation peuvent par exemple être opérés par différents fournisseurs d'un service de géolocalisation.

La figure 2 représente schématiquement un exemple de réalisation d'un terminal 20.

Tel qu'illustré par la figure 2, le terminal 20 comporte un premier module de communication 21 adapté à échanger des messages avec les stations de base 31 selon le premier protocole de communication sans fil. Le premier module de communication 21 se présente par exemple sous la forme d'un circuit radioélectrique comportant des équipements (antenne, amplificateur, oscillateur local, mélangeur, filtre analogique, etc.).

Le terminal 20 comporte également un second module de communication 22 adapté à recevoir des messages émis par le dispositif émetteur d'intérêt 40, selon le second protocole de communication sans fil. Le second module de communication 22 se présente par exemple sous la forme d'un circuit radio électrique comportant des équipements (antenne, amplificateur, oscillateur local, mélangeur, filtre analogique, etc.).

En outre, le terminal 20 comporte également un circuit de traitement 23, relié au premier module de communication 21 et au second module de communication 22. Le circuit de traitement 23 comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en œuvre tout ou partie des étapes d'un procédé de géolocalisation du terminal (voir ci-après).

Le serveur 32 du réseau d'accès 30 comporte également un ou plusieurs processeurs et des moyens de mémorisation dans lesquels est mémorisé un produit programme d'ordinateur, sous la forme d'un ensemble d'instructions de code de programme à exécuter pour mettre en œuvre tout ou partie des étapes d'un procédé de géolocalisation du terminal et/ou d'un procédé de mise à jour d'une base de données de fiabilité des identifiants (voir ci-après).

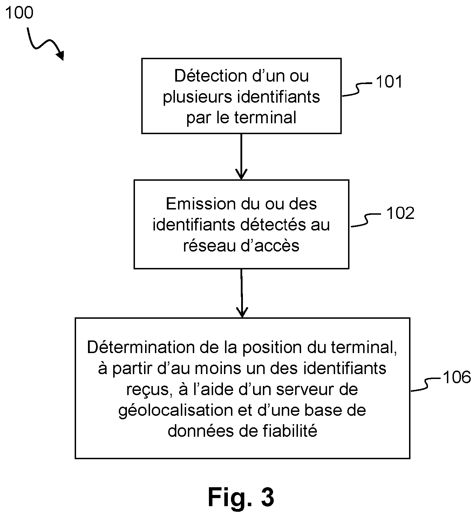

La figure 3 représente schématiquement les principales étapes d'un procédé 100 selon l'invention pour géolocaliser un terminal 20.

Le procédé 100 comporte une étape de détection 101, par le terminal 20, pour au moins un dispositif émetteur 40, d'un identifiant du dispositif émetteur 40 à partir d'un message émis par le dispositif émetteur 40 selon le second protocole de communication sans fil.

Le procédé 100 comporte ensuite une étape d'émission 102, par le terminal 20, à destination du réseau d'accès 30, et selon le premier protocole de communication sans fil, d'au moins un message comportant le ou les identifiants détectés à l'étape 101. Il convient de noter qu'un identifiant détecté peut être transmis dans un seul message ou dans plusieurs messages (chaque message comportant alors une portion dudit identifiant). Un même message peut éventuellement contenir plusieurs identifiants.

Le procédé 100 comporte ensuite une étape de détermination 106, par le réseau d'accès 30, d'une position géographique du terminal 20, à partir d'au moins un des identifiants reçus, et à l'aide d'une base de données, dite « base de données de fiabilité des identifiants » et d'un serveur 50 de géolocalisation. Cette étape de détermination 106 comporte notamment l'émission d'une requête comprenant au moins un des identifiants reçus au serveur 50 de géolocalisation.

La base de données de fiabilité des identifiants permet d'associer une valeur de fiabilité à un identifiant. La valeur de fiabilité est représentative de la confiance que l'on peut accorder à cet identifiant pour pouvoir géolocaliser précisément le terminal à l'aide de cet identifiant avec le serveur de géolocalisation.

Il convient de noter que la base de données de fiabilité des identifiants peut être construite pour renseigner sur la fiabilité des identifiants relativement à un seul serveur de géolocalisation, ou bien relativement à plusieurs serveurs de géolocalisation différents. Lorsqu'il existe plusieurs serveurs de géolocalisation différents, chaque valeur de fiabilité est associée en outre à un serveur de géolocalisation particulier.

La base de données de fiabilité des identifiants peut permettre de filtrer les identifiants à prendre en compte dans l'estimation de la position géographique du terminal à l'aide du serveur 50 de géolocalisation, en fonction des valeurs de fiabilité des identifiants reçus. Par exemple, une valeur de fiabilité faible est attribuée dans la base de données de fiabilité aux identifiants pour lesquels la position géographique associée dans la base de données de géolocalisation est jugée erronée ; les identifiants présentant une valeur de fiabilité trop faible ne seront pas pris en compte pour l'estimation de la position géographique du terminal.

Alternativement ou en complément, et lorsque plusieurs serveurs de géolocalisation différents sont considérés, les valeurs de fiabilité peuvent permettre de sélectionner le serveur de géolocalisation qui semble le plus fiable pour géolocaliser le terminal parmi une pluralité de serveurs de géolocalisation.

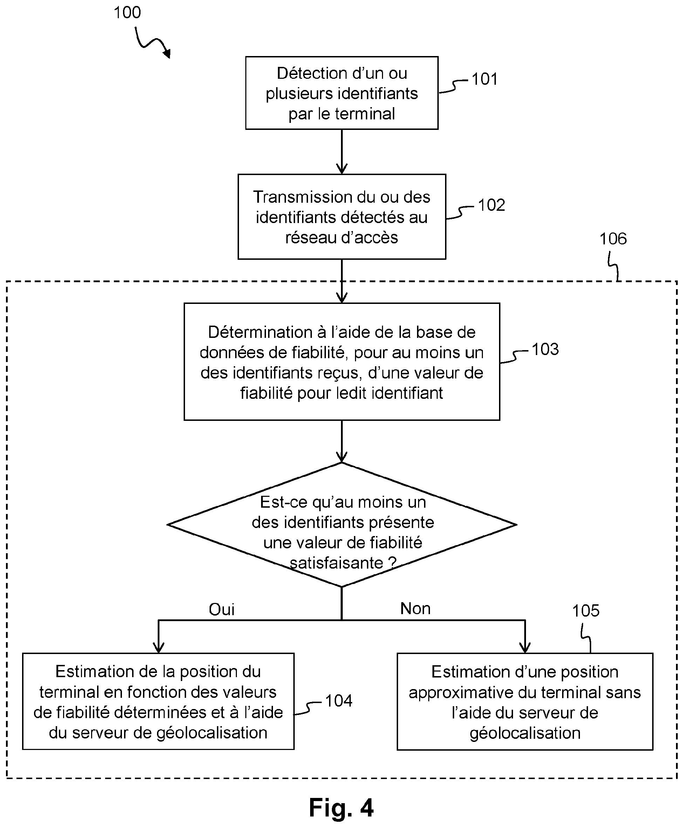

La figure 4 présente à titre d'exemple un mode particulier de mise en œuvre du procédé 100 de géolocalisation décrit ci-avant en référence à la figure 3. Le mode particulier de mise en œuvre décrit à la figure 4 permet de filtrer les identifiants à prendre en compte dans l'estimation de la position géographique du terminal à l'aide du serveur 50 de géolocalisation.

Tel qu'illustré sur la figure 4, dans ce mode particulier de mise en œuvre, le procédé 100 reprend les étapes 101 et 102 précédemment décrites en référence à la figure 3.

Le procédé 100 comporte ensuite une étape de détermination 103, pour chaque identifiant reçu, d'une valeur de fiabilité. La valeur de fiabilité est représentative d'une confiance accordée à l'identifiant pour géolocaliser le terminal 20 avec le serveur 50 de géolocalisation. Pour chaque identifiant, la valeur de fiabilité est déterminée à l'aide d'une base de données, dite « base de données de fiabilité des identifiants ». La base de données de fiabilité des identifiants est mémorisée par un ou plusieurs serveurs distincts du serveur 50 de géolocalisation. En particulier, la base de données de fiabilité des identifiants peut être mémorisée par le serveur 32 du réseau d'accès 30. La base de données de fiabilité des identifiants pourrait toutefois aussi être partagée entre plusieurs serveurs appartenant au réseau d'accès 30. Selon encore une autre variante, la base de données de fiabilité des identifiants pourrait être mémorisée par un ou plusieurs serveurs tiers connectés au réseau d'accès 30 mais gérés par un opérateur différent de l'opérateur qui gère le réseau d'accès 30.

La base de données de fiabilité des identifiants permet d'associer une valeur de fiabilité à un identifiant. La valeur de fiabilité correspond par exemple à une valeur (un score) comprise entre zéro et un. Plus la valeur de fiabilité d'un identifiant est proche de un, et plus on peut considérer que la position géographique du dispositif émetteur associée dans la base de données de géolocalisation audit identifiant est fiable. Inversement, plus la valeur de fiabilité d'un identifiant est proche de zéro, et plus il est probable que la position géographique du dispositif émetteur associée dans la base de données de géolocalisation audit identifiant est incorrecte.

Rien n'empêcherait toutefois de définir une valeur de fiabilité selon un pourcentage (entre zéro et cent). Rien n'empêcherait non plus d'attribuer une valeur de fiabilité faible à un identifiant fiable (au lieu d'attribuer une valeur de fiabilité forte à un identifiant fiable).

Selon un autre exemple, la base de données de fiabilité des identifiants correspond à une liste des identifiants qui ont été jugés suffisamment fiables. Si un identifiant n'est pas dans la base de données de fiabilité des identifiants, alors on peut lui attribuer une valeur de fiabilité égale à zéro. Si un identifiant est dans la base de données de fiabilité des identifiants, alors on peut lui attribuer une valeur de fiabilité égale à un.

Selon encore un autre exemple, la base de données de fiabilité des identifiants correspond à une liste des identifiants qui n'ont pas été jugés suffisamment fiables. Si un identifiant n'est pas dans la base de données de fiabilité des identifiants, alors on peut lui attribuer une valeur de fiabilité égale à un. Si un identifiant est dans la base de données de fiabilité des identifiants, alors on peut lui attribuer une valeur de fiabilité égale à zéro.

Il existe ainsi de nombreuses méthodes différentes pour attribuer une valeur de fiabilité à un identifiant et pour mémoriser cette information dans la base de données de fiabilité des identifiants. Le choix d'une méthode particulière parmi d'autres ne représente toutefois qu'une variante de l'invention.

Lorsqu'au moins un des identifiants reçus présente une valeur de fiabilité satisfaisante (c'est-à-dire par exemple une valeur de fiabilité supérieure à une valeur seuil prédéterminée), le procédé 100 comporte une étape d'estimation 104 d'une position géographique du terminal 20, en fonction des valeurs de fiabilité ainsi déterminées, et à l'aide du serveur 50 de géolocalisation.

Dans des modes particuliers de mise en œuvre, la valeur de fiabilité de chaque identifiant reçu est comparée à une valeur seuil pour déterminer si l'identifiant doit ou non être utilisé pour l'estimation 104 de la position géographique du terminal 20 à l'aide du serveur 50 de géolocalisation.

Dans des modes particuliers de mise en œuvre, un nombre maximal prédéterminé d'identifiants présentant les plus grandes valeurs de fiabilité sont utilisés pour l'estimation 104 de la position géographique du terminal 20 à l'aide du serveur 50 de géolocalisation.

De telles dispositions permettent de filtrer les identifiants à prendre en compte dans l'estimation de la position géographique du terminal à l'aide de la base de données de géolocalisation (c'est-à-dire pour filtrer les identifiants à inclure dans la requête à émettre au serveur 50 de géolocalisation), en fonction des valeurs de fiabilité des identifiants. Par exemple, si une valeur de fiabilité faible est attribuée dans la base de données de fiabilité aux identifiants pour lesquels la position géographique associée dans la base de données de géolocalisation est jugée erronée, il devient alors possible de favoriser les identifiants qui présentent une valeur de fiabilité élevée.

Dans l'exemple considéré, les étapes 103 et 104 sont mises en œuvre par le serveur 32 du réseau d'accès 30. Il convient toutefois de noter que, dans une variante, rien n'empêcherait que ces étapes soient mises en œuvre par un serveur tiers, par exemple un serveur tiers qui héberge la base de données de fiabilité des identifiants. On se place toutefois dans le cas où le ou les serveurs qui mémorisent la base de données de fiabilité des identifiants sont distincts du serveur 50 de géolocalisation. Cela permet à l'opérateur de la base de données de fiabilité des identifiants de maintenir sa base de données sans dépendre de l'opérateur du serveur 50 de géolocalisation. En outre, ces serveurs peuvent comporter des informations qui ne sont pas connues par le serveur 50 de géolocalisation (il peut s'agir par exemple d'informations privées connues uniquement du réseau d'accès 30 et qui ne doivent pas être communiquées au serveur 50 de géolocalisation).

Selon un premier exemple, le serveur 32 du réseau d'accès 30 envoie au serveur 50 de géolocalisation le ou les identifiants jugés suffisamment fiables, et le serveur 50 de géolocalisation estime la position du terminal 20 à partir des positions géographiques associées aux différents identifiants dans la base de données de géolocalisation. Selon un deuxième exemple, le serveur 50 de géolocalisation se contente de retourner la position géographique associée à chaque identifiant dans la base de données de géolocalisation, et c'est le serveur 32 qui estime la position du terminal 20 à partir des positions géographiques associées aux différents identifiants.

Dans l'exemple considéré et illustré à la figure 4, lorsqu'aucun des identifiants reçus ne présente une valeur de fiabilité satisfaisante, le procédé 100 comporte une étape d'estimation 105 d'une position géographique approximative du terminal 20 sans l'aide du serveur 50 de géolocalisation. Cette étape est par exemple mise en œuvre par le serveur 32 du réseau d'accès 30. Il convient toutefois de noter que, dans une variante, cette étape pourrait également être mise en œuvre par un serveur tiers, par exemple un serveur tiers qui héberge la base de données de fiabilité des identifiants. Il convient également de noter que cette étape est optionnelle (il serait envisageable de considérer qu'aucune position du terminal 20 ne peut être déterminée de façon fiable lorsqu'aucun des identifiants reçus ne présente une valeur de fiabilité satisfaisante).

La position géographique approximative du terminal 20 peut correspondre à des coordonnées (longitude, latitude et éventuellement altitude) d'une position estimée du terminal 20, avec éventuellement une indication de la précision de cette position estimée. Cela peut toutefois également être une information contextuelle permettant d'estimer la position du terminal 20, comme par exemple une adresse postale, un nom de magasin, un nom de quartier, de région ou de pays, etc. Cette information contextuelle peut notamment être déterminée directement à partir d'un ou plusieurs paramètres contenus dans le message émis par le terminal 20 et/ou à partir d'informations disponibles au sein du réseau d'accès associées au terminal 20 qui a émis le message et dérivées dudit message. A titre d'exemple, il est possible de déterminer dans quelle région ou dans quel pays se trouve le terminal 20 à partir d'un identifiant du terminal 20 si le réseau d'accès 30 a la connaissance que ce terminal appartient à une société cliente qui n'exerce que dans une région ou dans un pays particulier.

Le réseau d'accès 30 est par exemple configuré pour estimer une position géographique approximative du terminal 20 en fonction de messages reçus dudit terminal 20. Dans des modes particuliers de mise en œuvre, la position géographique approximative est estimée à partir du message reçu comportant l'identifiant du dispositif émetteur 40. Rien n'exclut cependant, suivant d'autres exemples, d'estimer la position géographique approximative du terminal 20 à partir d'autres messages préalablement émis par le terminal 20.

Différentes méthodes d'estimation de la position géographique approximative du terminal 20 peuvent être mises en œuvre. Par exemple, le réseau d'accès 30 peut estimer la position géographique approximative du terminal 20 comme étant la position géographique d'une station de base 31 qui a reçu un message émis par le terminal 20. Si plusieurs stations de base 31 peuvent recevoir un message émis par le terminal 20, il est possible d'estimer la position géographique approximative du terminal 20 en fonction des positions géographiques de toutes les stations de base 31 qui ont reçu le message émis par le terminal 20 (par exemple en définissant un barycentre de ces positions géographiques).

Selon un autre exemple, le réseau d'accès 30 peut estimer les distances qui séparent le terminal 20 d'une ou plusieurs stations de base 31 en calculant le temps de propagation d'un message émis par le terminal 20 à destination des stations de base 31 à partir des mesures TOA ou de mesures de différences d'instants d'arrivée (« Time Difference of Arrival » ou TDOA dans la littérature anglo-saxonne) de ce message au niveau des différentes stations de base 31. Il est alors ensuite possible d'estimer la position du terminal 20 par multilatération si les positions géographiques des stations de base 31 sont connues.

Selon un autre exemple, il est possible d'estimer la position du terminal 20 par multilatération en déterminant les distances qui séparent le terminal 20 de plusieurs stations de base 31 à partir d'une mesure RSSI pour chaque station de base 31 pour un message émis par le terminal 20 à destination du réseau d'accès 30.

Selon encore un autre exemple, la méthode d'estimation d'une position géographique approximative du terminal 20 par le réseau d'accès 30 peut reposer sur des techniques d'apprentissage automatique (« Machine Learning » dans la littérature anglo-saxonne) qui associent une empreinte radio à une position géographique de la zone géographique considérée. Une telle méthode se base sur l'hypothèse qu'un niveau de puissance de réception par une station de base 31 pour un message émis par le terminal 20 situé à une position géographique donnée est stable dans le temps.

Concrètement, il s'agit de construire pendant une première phase de calibration, une base de données qui associe à des positions géographiques connues une « signature radio » correspondant à l'ensemble des mesures RSSI obtenues pour un terminal 20 à la position géographique considérée pour un ensemble de stations de base 31. Ensuite, pendant une phase de recherche, une signature radio observée pour le terminal 20 dont on cherche à estimer la position géographique approximative est comparée à l'ensemble des signatures radio de la base de données afin d'estimer la position géographique approximative du terminal 20 à partir de la (ou des) position(s) géographique(s) correspondant à la (aux) signature(s) radio la (les) plus ressemblante(s) à la signature radio du terminal 20.

Dans des modes particuliers de mise en œuvre, l'estimation de la position géographique approximative du terminal 20 est effectuée par le réseau d'accès 30 sans qu'une information explicite contribuant à cette estimation ne soit envoyée par le terminal dans un message à destination du réseau d'accès (autrement dit, le terminal n'émet pas au réseau d'accès de messages dont les données binaires comportent une information permettant d'estimer la position géographique du terminal). De telles dispositions permettent de limiter la quantité de données échangées entre le terminal et le réseau d'accès pour géolocaliser le terminal 20.

Dans des modes particuliers de mise en œuvre, une position géographique approximative peut être attribuée à un dispositif émetteur 40 dans la base de données de fiabilité des identifiants. Cette position géographique approximative du dispositif émetteur 40 peut avoir été préalablement déterminée sans l'aide du serveur 50 de géolocalisation. Cette position géographique approximative du dispositif émetteur 40 peut correspondre, par exemple, à une position géographique approximative, estimée par le réseau d'accès 30, d'un terminal 20 qui a précédemment envoyé un message comportant l'identifiant dudit dispositif émetteur 40. La position géographique approximative peut également être estimée par le réseau d'accès 30 à partir des positions estimées de plusieurs terminaux 20 ayant précédemment envoyé un message comportant l'identifiant dudit dispositif émetteur 40. Il est ainsi possible de mettre en place un lissage dans le temps des positions estimées des terminaux ayant détecté et émis cet identifiant (médiane, moyenne pondérée, lissage exponentiel, etc.).

Il convient de noter que pour des questions légales, il n'est pas possible de mémoriser dans la base de données de fiabilité des identifiants une position d'un dispositif émetteur 40 fournie par la base de données de géolocalisation. Il est néanmoins avantageux de mémoriser une position géographique approximative d'un dispositif émetteur 40 dans la base de données de fiabilité des identifiants, pour aider ultérieurement à géolocaliser un terminal 20 qui détecte cet identifiant, dans le cas où la position associée à cet identifiant dans la base de données de géolocalisation n'est pas fiable.

Ainsi, dans des modes particuliers de mise en œuvre, la base de données de fiabilité des identifiants comporte, pour au moins un des identifiants reçus, une position géographique approximative du dispositif émetteur 40 portant ledit identifiant (ladite position géographique approximative ayant été préalablement déterminée sans l'aide du serveur 50 de géolocalisation), et la position géographique approximative du terminal 20 est estimée à l'étape 105 en fonction de la position géographique approximative associée audit identifiant.

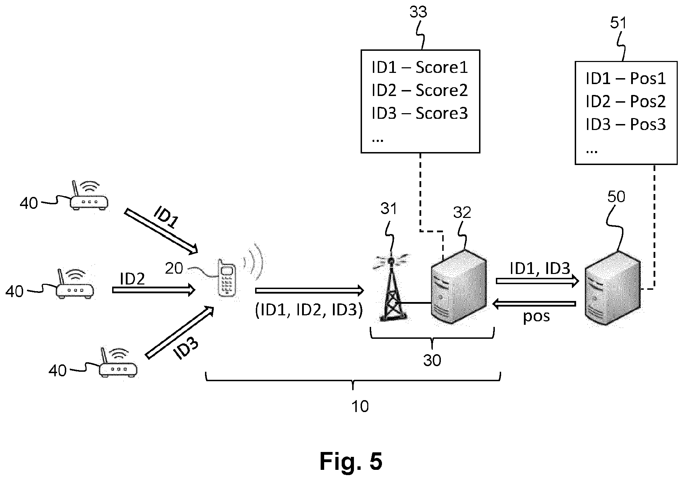

La figure 5 illustre un exemple de mise en œuvre du procédé 100 de géolocalisation selon l'invention.

Dans cet exemple, on considère qu'un terminal 20 détecte (à l'étape 101) trois dispositifs émetteurs 40 associés respectivement aux identifiants ID1, ID2, et ID3. Chaque identifiant est détecté sur un signal balise émis respectivement par chaque dispositif émetteur 40 selon le deuxième protocole de communication sans fil.

Le terminal 20 émet alors (à l'étape 102) un message comportant les identifiants détectés ID1, ID2, et ID3. Ce message est émis à destination du réseau d'accès 30 selon le premier protocole de communication sans fil.

Dans l'exemple considéré et illustré à la figure 5, un serveur 32 du réseau d'accès 30 détermine (à l'étape 103), pour chaque identifiant reçu, d'une valeur de fiabilité dans une base de données 33 de fiabilité des identifiants. Dans l'exemple considéré, la base de données 33 de fiabilité des identifiants est mémorisée par le serveur 32. Cette base de données 33 de fiabilité des identifiants associe un score (Score1, Score2, Score3, ...) à chaque identifiant (ID1, ID2, ID3, ...).

Un serveur 50 de géolocalisation distinct du serveur 32 mémorise une base de données 51 de géolocalisation faisant l'association entre des identifiants (ID1, ID2, ID3, ...) et la position géographique (pos1, pos2, pos3, ...) respectivement associée à chaque identifiant.

Dans l'exemple considéré, les scores de la base de données de fiabilité des identifiants correspondent à des valeurs comprises entre zéro et un, et plus la valeur d'un score associé à un identifiant est élevée et plus la fiabilité de la position géographique associée audit identifiant dans la base de données 51 de géolocalisation est jugée fiable.

Il est considéré, à titre d'exemple, que le score Score2 associée à l'identifiant ID2 présente une valeur faible, par exemple 0,2. Cela signifie que la position pos2 associée à l'identifiant ID2 dans la base de données 51 de géolocalisation est jugée erronée. Il est également considéré, à titre d'exemple, que les scores Score1 et Score3 sont respectivement égaux à 0,8 et 0,9. Cela signifie que les positions pos1 et pos3 associées respectivement aux identifiants ID1 et ID3 dans la base de données 51 de géolocalisation sont jugées correctes.

A titre d'exemple nullement limitatif, il est considéré que seuls les identifiants dont la valeur de fiabilité est supérieure ou égale à 0,7 doivent être utilisés pour géolocaliser le terminal 20 à l'aide de la base de données 51 de géolocalisation. Par conséquent, le serveur 32 envoie une requête comportant seulement les identifiants ID1 et ID3 au serveur 50 de géolocalisation pour estimer la position du terminal 20.

Une position géographique du terminal 20 (pos) est alors estimée (à l'étape 104), à partir des identifiants ID1 et ID3 qui ont été sélectionnés en fonction des valeurs de fiabilité, et à l'aide du serveur 50 de géolocalisation. Dans l'exemple illustré à la figure 5, la position pos est déterminée par le serveur 50 de géolocalisation. Dans une variante, le serveur 50 de géolocalisation aurait pu retourner les positions pos1 et pos3 associées respectivement aux identifiants ID1 et ID3, et le serveur 32 aurait alors pu déterminer une position géographique du terminal 20 à partir des positions pos1 et pos3 (par exemple en calculant un barycentre des positions pos1 et pos3).

La position du terminal 20 estimée à partir des positions pos1 et pos3 des identifiants ID1 et ID3 est plus fiable et plus précise qu'une position qui serait déterminée en prenant en compte aussi la position pos2 de l'identifiant ID2 (puisque cette position pos2 est incorrecte).

La structure de la base de données 33 de fiabilité des identifiants illustrée à la figure 5 est assez basique puisqu'elle se contente d'associer à un identifiant une valeur de fiabilité. Il est toutefois envisageable d'associer d'autres informations à chaque identifiant mémorisé dans la base de données 33 de fiabilité des identifiants.

En particulier, et comme cela a déjà été mentionné précédemment, il est possible d'associer à chaque identifiant une position géographique approximative du dispositif émetteur 40 portant ledit identifiant, ladite position géographique approximative ayant été préalablement déterminée sans l'aide du serveur 50 de géolocalisation.

D'autres informations pourraient être associée à un identifiant dans la base de données 33 de fiabilité des identifiants.

Dans des modes particuliers de mise en œuvre, un identifiant peut être associé, dans la base de données 33 de fiabilité des identifiants, à plusieurs valeurs de fiabilité associées chacune à une valeur différente d'une information de discrimination.

Le procédé 100 de géolocalisation peut alors comporter des étapes supplémentaires de détermination d'une valeur de l'information de discrimination pour le terminal 20 à partir du message reçu, et d'obtention, pour au moins un des identifiants reçus, d'une valeur de fiabilité à prendre en compte pour l'estimation 104 de la position géographique du terminal 20. Il s'agit par exemple de sélectionner une valeur de fiabilité parmi les différentes valeurs de fiabilité disponibles pour ledit identifiant (cette sélection est effectuée en fonction de la valeur de l'information discrimination déterminée). Selon un autre exemple, la valeur de fiabilité à prendre en compte pour un identifiant peut être obtenue via un calcul basé sur plusieurs valeurs de fiabilité.

L'information de discrimination peut correspondre à une information représentative d'un groupe de terminaux auquel appartient le terminal 20 (comme par exemple le nom de la société cliente à laquelle appartient le terminal 20, un type d'appareil correspondant au terminal 20, etc.).

L'information de discrimination peut également correspondre à une zone géographique dans laquelle se trouve le terminal 20. Il peut arriver que deux dispositifs émetteurs 40 partageant le même identifiant soient situés à deux positions géographiques très éloignées l'une de l'autre, et que seule l'une des deux positions géographiques soit associée audit identifiant dans la base de données 51 de géolocalisation. La base de données 33 de fiabilité des identifiants pourra alors associer une valeur de fiabilité forte audit identifiant pour un terminal 20 qui est localisée dans une zone géographique qui comprend également le dispositif émetteur dont la position est mémorisée dans la base de données 51 de géolocalisation. En revanche, la base de données 33 de fiabilité des identifiants pourra associer une valeur de fiabilité faible audit identifiant pour un terminal 20 qui est localisée dans une zone géographique qui comprend le dispositif émetteur dont la position est celle qui n'est pas mémorisée dans la base de données 51 de géolocalisation. L'utilisation d'une information de discrimination peut alors permettre de savoir si l'identifiant en question doit être utilisé ou non dans l'estimation 104 de la position géographique du terminal 20.

L'information de discrimination peut également correspondre à une information représentative d'au moins un autre identifiant de dispositif émetteur 40 détecté par le terminal 20. En effet, des dispositifs émetteurs 40 qui sont proches géographiquement les uns des autres sont généralement détectés simultanément par un terminal 20. Cette information peut permettre de sélectionner une valeur de fiabilité à prendre en compte pour un identifiant donné : par exemple, si deux dispositifs émetteurs partagent le même identifiant, mais si un seul de ces deux dispositifs émetteurs a déjà été détecté simultanément avec un autre dispositif émetteur indiqué dans le message émis par le terminal 20, alors il est envisageable d'attribuer audit identifiant, dans la base de données 33 de fiabilité, une première valeur de fiabilité lorsque l'autre identifiant est également détecté, et une deuxième valeur de fiabilité lorsque l'autre identifiant n'est pas détecté.

Dans des modes particuliers de mise en œuvre, l'information de discrimination permet d'identifier un serveur 50 de géolocalisation (par exemple via une adresse internet du serveur, un nom de domaine, un nom de l'opérateur qui gère le serveur, etc.). Le procédé 100 de géolocalisation peut alors comporter une étape de sélection du serveur 50 de géolocalisation à utiliser (parmi les différents serveurs de géolocalisation disponibles) pour l'estimation 104 de la position géographique du terminal 20. Cette sélection est effectuée en fonction des différentes valeurs de fiabilité associées à au moins un des identifiants reçus. Cette sélection permet de définir le destinataire de la requête qui est émise à un serveur de géolocalisation pour estimer la position du terminal.

Il peut en effet arriver que la position géographique d'un dispositif émetteur dont l'identifiant est mémorisé dans un premier serveur de géolocalisation soit incorrecte, mais que la position géographique dudit dispositif émetteur mémorisée dans un deuxième serveur de géolocalisation soit correcte. La base de données 33 de fiabilité des identifiants pourra alors associer une valeur de fiabilité faible audit identifiant pour la première base de données 51 de géolocalisation, et une valeur de fiabilité forte audit identifiant pour la deuxième base de données 51 de géolocalisation. L'information de discrimination peut alors permettre de savoir laquelle des deux bases de données de géolocalisation doit préférentiellement être utilisée pour l'estimation 104 de la position géographique du terminal 20.

De nombreux autres exemples d'information de discrimination pourraient être envisagés et déterminés à partir d'informations explicitement contenues dans le message reçu du terminal 20, ou bien à partir de métadonnées du message connues du réseau d'accès 30. Le choix d'une information de discrimination particulière n'est qu'une variante de l'invention.

L'information de discrimination peut aussi correspondre à la combinaison de plusieurs informations de natures différentes.

Différentes structures peuvent être envisagées pour mémoriser les données dans la base de données 33 de fiabilité des identifiants. Le choix d'une structure particulière de la base de données 33 de fiabilité des identifiants n'est qu'une variante de l'invention.

La figure 5 illustre un premier exemple selon lequel la base de données 33 de fiabilité des identifiants mémorise simplement un score attribué à chaque identifiant.

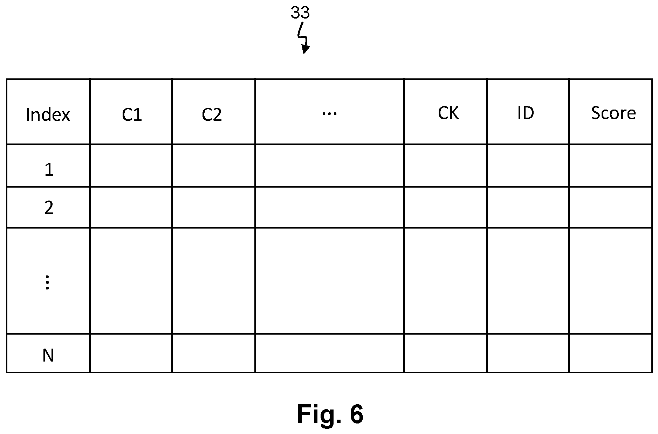

La figure 6 illustre, à titre d'exemple nullement limitatif, une autre structure possible de la base de données 33 de fiabilité des identifiants.

Dans l'exemple considéré et illustré à la figure 6, chaque ligne contient un identifiant ID d'un dispositif émetteur 40 (ou éventuellement un tuple d'identifiants) qui a déjà été renseigné par le passé dans au moins un message préalablement reçu en provenance d'un terminal 20 du système 10 de communication. Plusieurs informations relatives audit message sont mémorisées en association avec ledit identifiant (ou tuple d'identifiants). Par exemple, les informations C1, C2, ..., CK correspondent à des caractéristiques relatives au terminal 20 déterminées par le réseau d'accès 30 à partir du message reçu. Il peut notamment s'agir de données explicites contenues dans le message ou de métadonnées associées au message ou au terminal 20 ayant émis le message (par exemple un identifiant du terminal, le nom de la société cliente à laquelle appartient le terminal, un type particulier de terminal, un service particulier associé au terminal, une information sur la position géographique du terminal déterminée par le réseau d'accès, etc.). Certaines des informations C1, C2, ..., CK peuvent également permettre d'identifier un serveur de géolocalisation particulier (dans le cas où plusieurs serveurs 50 de géolocalisation seraient disponibles, une valeur de fiabilité peut être associée à un serveur de géolocalisation particulier) ou de caractériser ledit serveur 50 de géolocalisation (type ou coût de service proposé, par exemple). Pour chaque identifiant ID, la base de données 33 de fiabilité des identifiants mémorise également une valeur de fiabilité (un score) associé audit identifiant. Lorsque plusieurs dispositifs émetteurs sont détectés par le terminal 20 et renseignés dans le message émis au réseau d'accès 30, une ligne peut contenir plusieurs identifiants et les scores associés. La façon dont les scores sont calculés sera détaillée ultérieurement.

Lorsqu'un message est reçu en provenance d'un terminal 20 dont on cherche à estimer la position géographique, une information de discrimination peut être déterminée à partir dudit message. L'information de discrimination peut correspondre à une caractéristique particulière déterminée pour le message reçu, ou bien à une combinaison de caractéristiques particulières déterminées pour le message reçu.

Par exemple, si un identifiant ID de valeur A (ID = A) est contenu dans le message, et si le réseau d'accès 30 est capable de déterminer que le terminal 20 appartient à la société cliente B (C1 = B), et que le terminal se trouve dans le pays C (C2 = C), alors il est possible de faire une requête à la base de données 33 de fiabilité des identifiants pour obtenir les différents scores pour lesquels les conditions (ID = A), (C1 = B), et (C2 = C) et pour déterminer une valeur de fiabilité pour l'identifiant A à partir des scores obtenus.

Selon un autre exemple, une caractéristique (par exemple C3) peut correspondre à des coordonnées d'une position géographique approximative du terminal 20 déterminée par le réseau d'accès 30 (C3 = D). Dans cas, il est envisageable de faire une requête à la base de données 33 de fiabilité des identifiants pour obtenir les différents scores pour lesquels d'une part la condition (ID = A) est satisfaite et d'autre part la position indiquée pour la caractéristique C3 appartient à une région géographique centrée sur C et présentant un certain diamètre.

Il est ainsi possible d'élaborer différentes stratégies pour déterminer, à l'étape 103, une valeur de fiabilité pour un identifiant d'un dispositif émetteur 40 détecté par le terminal 20. Le choix d'une stratégie particulière ne constitue toutefois qu'une variante de l'invention.

Il convient désormais de s'intéresser à la façon dont la base de données 33 de fiabilité des identifiants peut être construite et maintenue à jour.

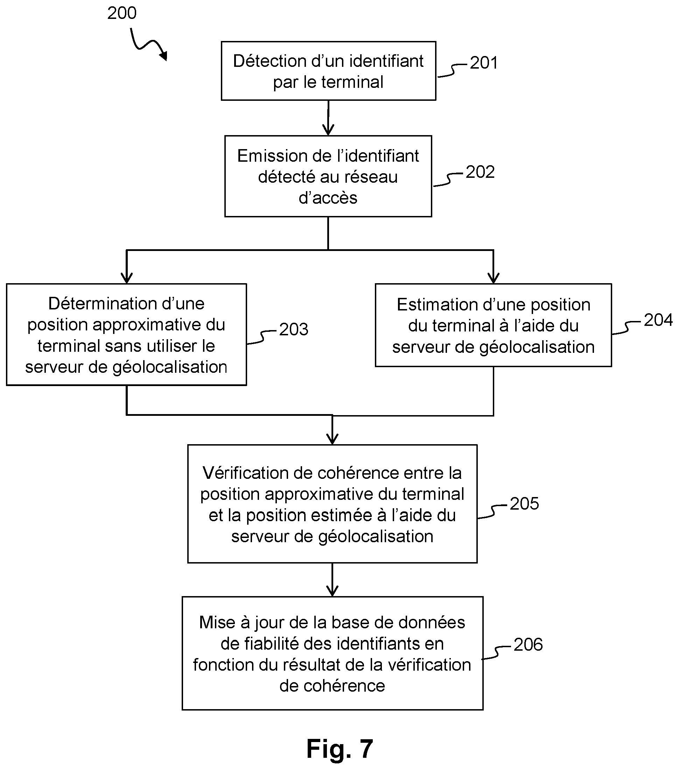

La figure 7 représente schématiquement les principales étapes d'un exemple de mise en œuvre d'un procédé 200 de mise à jour de la base de données 33 de fiabilité des identifiants (ou de création de la base de données 33 de fiabilité des identifiants si celle-ci n'existe pas encore).

Le procédé 200 de mise à jour comporte une étape de détection 201, par un terminal 20 du système 10 de communication sans fil, pour au moins un dispositif émetteur 40, de l'identifiant dudit dispositif émetteur 40. L'identifiant du dispositif émetteur 40 est détecté à partir d'un message émis par le dispositif émetteur 40 selon le deuxième protocole de communication sans fil. Il convient de noter qu'il peut s'agir du même terminal 20 ou d'un autre terminal 20 que celui précédemment mentionné dans la description du procédé 100 de géolocalisation. Aussi, il peut s'agir d'un même dispositif émetteur 40 ou d'un autre dispositif émetteur 40 que ceux mentionnés dans la description du procédé 100 de géolocalisation. Cette étape 201 est similaire à l'étape 101 précédemment décrite en référence à la figure 3.

Le procédé 200 de mise à jour comporte ensuite une étape d'émission 202, par le terminal 20, à destination du réseau d'accès 30, d'un message comportant ledit identifiant. Ce message est émis par le terminal 20 selon le premier protocole de communication sans fil. Cette étape 202 est similaire à l'étape 102 précédemment décrite en référence à la figure 3.

Le procédé 200 de mise à jour comporte une étape de détermination 203, sans utiliser le serveur 50 de géolocalisation, d'une position géographique approximative du terminal 20. Cette étape est similaire à l'étape 105 précédemment décrite en référence à la figure 4. Les différentes méthodes précédemment proposées dans la description de l'étape 105 pour déterminer une position géographique approximative du terminal 20 sont également valable pour cette étape 203.

Le procédé 200 de mise à jour comporte une étape d'estimation 204 d'une position géographique du terminal 20, à l'aide du serveur 50 de géolocalisation, et à partir de l'identifiant reçu. Dans cette étape, la valeur de fiabilité associée à l'identifiant dans la base de données 33 de fiabilité des identifiants n'est pas nécessairement prise en compte.

Le procédé 200 de mise à jour comporte ensuite une étape de vérification 205 de cohérence, entre la position géographique approximative du terminal 20 (déterminée à l'étape 203) et la position géographique du terminal 20 estimée (à l'étape 204) à l'aide du serveur 50 de géolocalisation.

Enfin, le procédé 200 de mise à jour comporte une étape de mise à jour 206 de la base de données 33 de fiabilité des identifiants, pour ledit identifiant, en fonction du résultat de la vérification 205 de cohérence.

Dans l'exemple considéré, les étapes 203, 204, 205 et 206 sont mises en œuvre par le serveur 32 du réseau d'accès 30. Il convient toutefois de noter que, dans une variante, rien n'empêcherait que tout ou partie de ces étapes soient mises en œuvre par un serveur tiers, par exemple un serveur tiers qui héberge la base de données de fiabilité des identifiants (on se place cependant toujours dans le cas où le ou les serveurs qui mémorisent la base de données de fiabilité des identifiants sont distincts du serveur 50 de géolocalisation).

L'étape de vérification 205 de cohérence peut comporter, pour l'identifiant reçu, un calcul d'une distance entre la position géographique approximative du terminal 20 (déterminée à l'étape 203) et la position géographique associée à l'identifiant dans la base de données 51 de géolocalisation (cette position correspond généralement à la position du terminal 20 estimée à l'étape 204, notamment lorsqu'un seul identifiant est considéré).

Par exemple, si on note $P_1$ la position géographique approximative du terminal 20 ; $R_1$ une valeur représentative d'un niveau de précision de l'estimation de cette position géographique $P_1$ (rayon autour $P_1$ dans lequel le terminal est supposé présent avec un certain niveau de probabilité, par exemple 90%) ; $P_2$ la position géographique associée à l'identifiant dans la base de données 51 de géolocalisation ; $R_2$ la valeur représentative du niveau de précision de cette position géographique $P_2$ ; $dist(P_1, P_2)$ la distance entre $P_1$ et $P_2$; alors il est envisageable de déterminer le résultat de la vérification 205 de cohérence en fonction de l'expression suivante :

[Math. 1]

$$dist(P_1, P_2) \leq f(R_1, R_2)$$

Si cette expression est fausse, alors il y a une incohérence entre la position géographique approximative du terminal 20 (déterminée à l'étape 203) et la position géographique associée à l'identifiant dans la base de données 51 de géolocalisation. En revanche, si cette expression est vraie, alors la position géographique approximative du terminal 20 déterminée à l'étape 203 est cohérente avec la position géographique associée à l'identifiant dans la base de données 51 de géolocalisation. A titre d'exemple nullement limitatif, la fonction f peut être définie ainsi (le résultat des fonctions dist et f sont par exemple des valeurs en mètres) :

[Math. 2]

$$f(R_1, R_2) = 3 \times (R_1 + R_2) + 500$$

Lorsque la position géographique est une information contextuelle (et non pas des coordonnées), l'information contextuelle représentative de la position géographique du terminal 20 déterminée à l'étape 203 peut être comparée avec l'information contextuelle associée à l'identifiant du dispositif émetteur 40 dans la base de données 51 de géolocalisation. Cette comparaison peut éventuellement être mise en œuvre à l'aide d'une application de type géocodage inversé (« reverse geocoding » dans la littérature anglo-saxonne).

Lorsque plusieurs identifiants de dispositifs émetteurs 40 différents détectés par le terminal 20 sont reçus par le réseau d'accès 30 dans un même message (ou dans plusieurs messages émis à des instants proches), la position géographique du terminal 20 peut être estimée à l'étape 204 à partir de l'ensemble des identifiants reçus. Pour l'un au moins des identifiants reçus, dit « identifiant d'intérêt », la vérification 205 de cohérence peut comprendre les étapes suivantes :

- une première vérification de cohérence entre la position géographique du terminal 20 estimée à l'étape 204 à l'aide du serveur 50 de géolocalisation et la position géographique approximative du terminal 20 déterminée à l'étape 203,
- si la première vérification de cohérence indique une incohérence, une deuxième vérification de cohérence entre la position géographique associée dans la base de données 51 de géolocalisation à l'identifiant d'intérêt et la position géographique approximative du terminal 20.

Autrement dit, la position géographique approximative du terminal 20 est comparée dans un premier temps à une ou plusieurs positions géographiques déterminées pour un ou plusieurs tuples d'identifiants construits à partir des identifiants reçus. Une première vérification de cohérence est alors réalisée entre la position géographique approximative du terminal 20 (déterminée à l'étape 203 sans le serveur de géolocalisation 50) et la ou les positions géographiques déterminées avec le serveur de géolocalisation 50 à partir desdits tuples d'identifiants. Si une incohérence est constatée, une deuxième vérification de cohérence peut être effectuée pour chaque identifiant du tuple considéré. Il convient de noter que des informations additionnelles peuvent être utilisées pour pondérer les différents identifiants composant un tuple. Ces informations additionnelles peuvent correspondre, par exemple, à des niveaux de puissance auxquels les différents messages comportant les identifiants ont été reçus par le terminal 20 en provenance des différents dispositifs émetteurs 40 détectés.

De telles dispositions peuvent notamment permettre de diminuer le nombre de requêtes émises au serveur 50 de géolocalisation (une seule requête comportant une pluralité d'identifiants est émise au serveur 50 de géolocalisation dans un premier temps, et des requêtes individuelles relatives à un seul identifiant ne sont émises que si une incohérence est observée).

Lorsqu'une incohérence est observée pour un identifiant, cela signifie que l'identifiant n'est pas fiable, ou au moins que l'identifiant est peu fiable, et il convient de renseigner cette information dans la base de données 33 de fiabilité des identifiants.

Pour cela, si la base de données 33 de fiabilité des identifiants mémorise uniquement les identifiants qui sont jugés fiable, il convient de supprimer ledit identifiant de la base de données 33 de fiabilité des identifiants.

Selon un autre exemple, si la base de données 33 de fiabilité des identifiants mémorise uniquement les identifiants qui sont jugés non fiable, il convient d'ajouter ledit identifiant de la base de données 33 de fiabilité des identifiants.

Selon encore un autre exemple, si la base de données 33 de fiabilité des identifiants associe une valeur de fiabilité comprise entre zéro et un à chaque identifiant qu'elle mémorise (une valeur proche de un indiquant une bonne fiabilité), alors l'étape de mise à jour 206 peut comporter un calcul d'une nouvelle valeur de fiabilité pour cet identifiant. La nouvelle valeur de fiabilité peut notamment être calculée en fonction de la distance entre la position géographique approximative du terminal 20 et la position géographique associée audit identifiant dans la base de données 51 de géolocalisation. Par exemple, en reprenant les notations utilisées ci-avant pour les formules [Math 1.] et [Math. 2], la nouvelle valeur de fiabilité $S_N$ peut être calculée ainsi ( $\alpha$ étant un coefficient de normalisation) :

[Math. 3]

$$S_N = exp\left(-\alpha\left(\frac{dist(P_1, P_2)}{3 \times (R_1 + R_2)}\right)\right)$$

Dans des modes particuliers de mise en œuvre, la nouvelle valeur de fiabilité est calculée en outre en fonction d'une valeur de fiabilité $S_P$ précédemment attribuée audit identifiant dans la base de données 33 de fiabilité des identifiants.

Dans des modes particuliers de mise en œuvre, la base de données 33 de fiabilité des identifiants comporte, pour chaque identifiant, une date de dernière mise à jour de la valeur de fiabilité. La nouvelle valeur de fiabilité $S_N$ peut alors être calculée en fonction d'une date courante $T_N$ et en fonction de la date de dernière mise à jour $T_P$ de la valeur de fiabilité dudit identifiant ( $\gamma$ est un coefficient de normalisation) :

[Math. 4]

$$\beta = exp(-\gamma \times |T_N - T_P|)$$

$$S_N = \beta \times S_P + (1 - \beta)exp\left(-\alpha\left(\frac{dist(P_1, P_2)}{3 \times (R_1 + R_2)}\right)\right)$$

Comme cela a déjà été indiqué précédemment, il est également envisageable de mettre à jour, dans la base de données 33 de fiabilité des identifiants, pour ledit identifiant, une position géographique approximative du dispositif émetteur 40 portant ledit identifiant (cette dernière étant déterminée sans l'aide du serveur 50 de géolocalisation).

Le procédé 200 de mise à jour a été décrit ci-avant dans un scénario où l'étape de vérification 205 de cohérence et l'étape de mise à jour 206 sont mises en œuvre en réponse à la réception d'un message émis par un terminal 20. Il convient toutefois de noter que le procédé 200 de mise à jour n'est pas nécessairement mis en œuvre message par message. Le serveur qui met en œuvre le procédé 200 de mise à jour peut notamment être configuré pour collecter plusieurs messages avant de mettre en œuvre les étapes de vérification 205 de cohérence et de mise à jour 206. Il peut en effet être complexe et coûteux de mettre à jour une base de données de façon « continue », et il peut être plus avantageux de regrouper des vérifications et/ou des corrections à apporter à la base de données.

Autrement dit, l'étape de vérification 205 de cohérence et l'étape de mise à jour 206 (et éventuellement aussi l'étape de détermination 203 d'une position géographique approximative du terminal 20 sans utiliser le serveur 50 de géolocalisation et/ou l'étape d'estimation 204 d'une position géographique du terminal 20 à l'aide du serveur 50 de géolocalisation) peuvent être retardées jusqu'à ce qu'un critère prédéterminé soit satisfait. Ce critère peut correspondre notamment à l'expiration d'un délai d'attente, au fait qu'un certain nombre de messages comportant un identifiant de dispositif émetteur a été reçu, ou au fait qu'un certain nombre d'identifiants de dispositifs émetteurs a été reçu. D'autres critères pourraient toutefois être envisagés pour retarder, et donc regrouper, la mise en œuvre de ces étapes pour plusieurs identifiants de dispositifs émetteurs différents. Il est également envisageable de retarder l'étape de mise à jour 206 par rapport à l'étape de vérification 205 de cohérence.

Il convient de noter que, lorsque plusieurs serveurs 50 de géolocalisation sont disponibles, il est possible d'interroger les différents serveurs 50 de géolocalisation pour mettre à jour la base de données de fiabilité des identifiants. En particulier, il est envisageable de définir, pour un même identifiant, plusieurs valeurs de fiabilité différentes, chaque valeur de fiabilité étant associée à un serveur 50 de géolocalisation particulier (chaque valeur de fiabilité pouvant être calculée en fonction du résultat d'une vérification 205 de cohérence effectuée pour le serveur 50 de géolocalisation associé). Selon un autre exemple, il est possible de définir, pour un identifiant donné, une valeur de fiabilité calculée en fonction des résultats de plusieurs vérifications 205 de cohérence effectuées auprès de plusieurs serveurs 50 de géolocalisation (par exemple la valeur de fiabilité peut correspondre à une moyenne de plusieurs valeurs de fiabilité calculée individuellement pour chaque serveur 50 de géolocalisation).

Dans des modes particuliers de mise en œuvre, il est en outre envisageable d'émettre à un ou plusieurs terminaux 20 du système 10 de communication sans fil un message comportant une liste d'identifiants sélectionnés en fonction des valeurs de fiabilité qui leur sont associées dans la base de données 33 de fiabilité des identifiants. Il est par exemple envisageable de communiquer aux terminaux une liste des identifiants qui sont jugés non fiables, pour éviter que les terminaux n'envoient inutilement ces identifiants dans les messages qu'ils adressent au réseau d'accès 30. Selon un autre exemple, il est envisageable de communiquer aux terminaux une liste des identifiants qui sont jugés fiables, pour inciter les terminaux à envoyer ces identifiants dans les messages qu'ils adressent au réseau d'accès 30.

Il convient de noter que le procédé 200 de mise à jour de la base de données 33 de fiabilité des identifiants n'est généralement pas mis en œuvre pour chaque message reçu d'un terminal 20. La base de données de fiabilité des identifiants doit toutefois être régulièrement mise à jour car une position géographique erronée d'un dispositif émetteur 40 dans la base de données 51 de géolocalisation peut être corrigée au bout d'un certain temps. Il convient donc, lorsqu'un identifiant est jugé peu fiable dans la base de données 33 de fiabilité des identifiants, de mettre en œuvre régulièrement le procédé 200 de mise à jour de la base de données 33 de fiabilité pour cet identifiant.

Tout type d'interface peut être envisagé entre le serveur 32 du réseau d'accès 30 et le serveur de géolocalisation 50 et entre le serveur 32 et le serveur hébergeant la base de données de fiabilité des identifiants (lorsque la base de données de fiabilité des identifiants est hébergée par un serveur différent du serveur 32). En particulier, il est possible d'envisager l'utilisation d'un fichier, d'une interface de programmation, d'une fonction de rappel, etc.

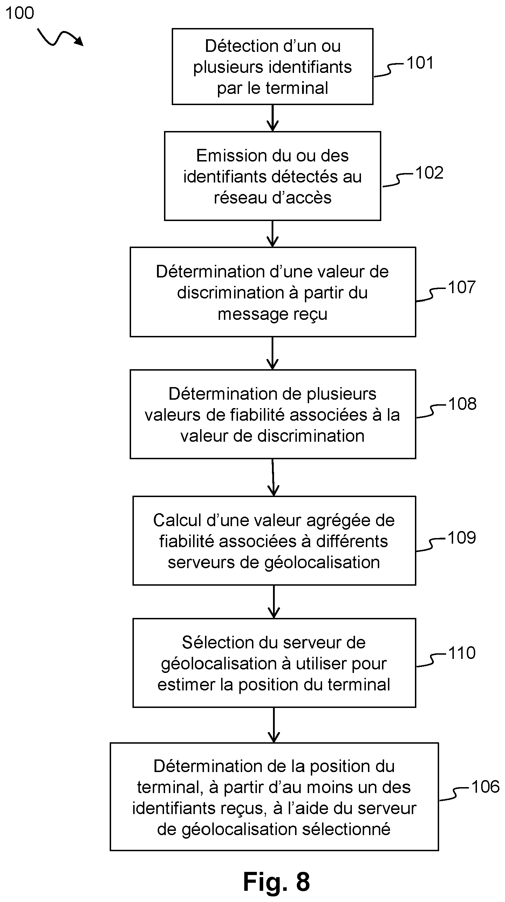

La figure 8 présente à titre d'exemple un autre mode particulier de mise en œuvre du procédé 100 de géolocalisation décrit ci-avant en référence à la figure 3. Pour ce mode particulier de mise en œuvre, on considère que plusieurs serveurs 50 de géolocalisation différents sont disponibles pour géolocaliser le terminal 20. Dans la base de données de fiabilité des identifiants, un identifiant est associé à plusieurs valeurs de fiabilité et chaque valeur de fiabilité est associée à un serveur de géolocalisation particulier. En outre, chaque valeur de fiabilité est associée à une valeur particulière d'une information de discrimination.

Le mode particulier de mise en œuvre décrit à la figure 8 permet de sélectionner le serveur 50 de géolocalisation qui semble le plus fiable pour géolocaliser le terminal parmi les différents serveurs 50 de géolocalisation disponibles.

Dans ce mode particulier de mise en œuvre, le procédé 100 comporte une détermination 107 d'une valeur de l'information de discrimination, par le réseau d'accès 30, à partir d'un message reçu du terminal 20 (ledit message comportant au moins une portion d'un identifiant d'un dispositif émetteur 40 détecté par le terminal 20).

Par exemple, l'information de discrimination peut correspondre à une position géographique approximative du terminal 20 au moment il émet le message (où à une zone géographique dans laquelle on estime que le terminal 20 se trouve au moment il émet le message). La position approximative du terminal 20 peut être estimée par le réseau d'accès 30 selon différentes méthodes déjà décrites précédemment. Selon d'autres exemple, l'information de discrimination peut correspondre à un nom de société cliente à laquelle appartient le terminal 20, un type d'appareil correspondant au terminal 20, etc.

Le procédé 100 comporte ensuite une détermination 108 de plusieurs valeurs de fiabilité associées à ladite valeur d'information de discrimination dans la base de données 33 de fiabilité des identifiants. Il convient de noter que ces valeurs de fiabilité ne sont pas nécessairement associées à des identifiants correspondant à l'identifiant (ou aux identifiants) détecté(s) et renseignés par le terminal 20.

Le procédé 100 comporte ensuite un calcul 109 d'une valeur agrégée de fiabilité, pour chacun des serveurs 50 de géolocalisation disponibles, à partir des valeurs de fiabilité ainsi déterminées. La valeur agrégée peut être calculée selon différentes méthodes (moyenne, médiane, quantile ou autre). Une valeur agrégée peut être calculée en prenant en compte l'ensemble des identifiants répondant à la valeur de discrimination, ou bien seulement un sous-ensemble des identifiants répondant à la valeur de discrimination. Il est notamment envisageable de prendre en compte seulement les identifiants qui répondent à la valeur de discrimination pour tous les serveurs de géolocalisation considérés.

Le procédé 100 comporte ensuite une sélection 110 du serveur 50 de géolocalisation à utiliser pour l'estimation 104 de la position géographique du terminal 20 en fonction des valeurs agrégées calculées (par exemple, on sélectionne le serveur 50 de géolocalisation présentant la meilleure valeur agrégée calculée).

La position géographique du terminal 20 est finalement déterminée, à l'étape 106, à partir d'au moins un des identifiants reçus, à l'aide du serveur de géolocalisation sélectionné.

Avec ce mode particulier de mise en œuvre, il devient possible de sélectionner le serveur 50 de géolocalisation qui semble le plus fiable pour géolocaliser le terminal 20 même dans le cas où l'identifiant (ou les identifiants) détectés par le terminal 20 et transmis au réseau d'accès 30 ne sont pas présents dans la base de données 33 de fiabilité des identifiants.

Il convient de noter que d'autres critères peuvent être pris en compte pour calculer une valeur agrégée. Il est possible, par exemple, de prendre en compte un coût de service associé à un serveur 50 de géolocalisation, afin de favoriser les serveurs 50 de géolocalisation les moins coûteux. Selon un autre exemple, il est possible de prendre en compte le nombre d'identifiants dans la base de données 33 de fiabilité qui répondent à la valeur de discrimination. Selon encore un autre exemple, il est envisageable, lors du calcul d'une valeur agrégée, de pondérer la valeur de fiabilité d'un identifiant en fonction de la date de la dernière mise à jour de ladite valeur de fiabilité (afin de donner plus d'importance aux valeurs de fiabilité qui ont été mises à jour récemment). Il est également possible de pondérer une valeur agrégée calculée pour un serveur 50 de géolocalisation en fonction d'une date moyenne de la dernière mise à jour des valeurs de fiabilité des identifiants utilisés pour calculer la valeur agrégée (afin de favoriser les serveurs 50 de géolocalisation pour lesquels on a des informations plus récentes).

Il convient de noter que, pour une information de discrimination donnée, une valeur agrégée peut être calculée soit directement au moment où l'on cherche à déterminer la position du terminal 20 (c'est-à-dire lorsque le réseau d'accès 30 reçoit un ou plusieurs messages du terminal 20 comportant un ou plusieurs identifiants de dispositifs émetteurs 40), soit à un autre moment, en fonction de critères particuliers (par exemple, une valeur agrégée peut être mise à jour de façon périodique, ou bien après qu'un certain nombre de messages ont été reçus, etc.). Notamment, lorsque l'information de discrimination est une zone géographique dans laquelle se trouve le terminal 20, cette zone géographique peut être définie en fonction de la position approximative estimée du terminal 20, au moment où le réseau d'accès 30 reçoit un ou plusieurs messages du terminal 20. Cette zone géographique peut toutefois également être identifiée, en fonction de la position approximative estimée du terminal 20, parmi plusieurs zones géographiques correspondant à un découpage prédéterminé d'un espace géographique à couvrir (dans ce cas, une valeur agrégée peut être préalablement calculée pour chaque zone géographique du découpage à un moment qui est indépendant de la réception d'un message en provenance du terminal 20).

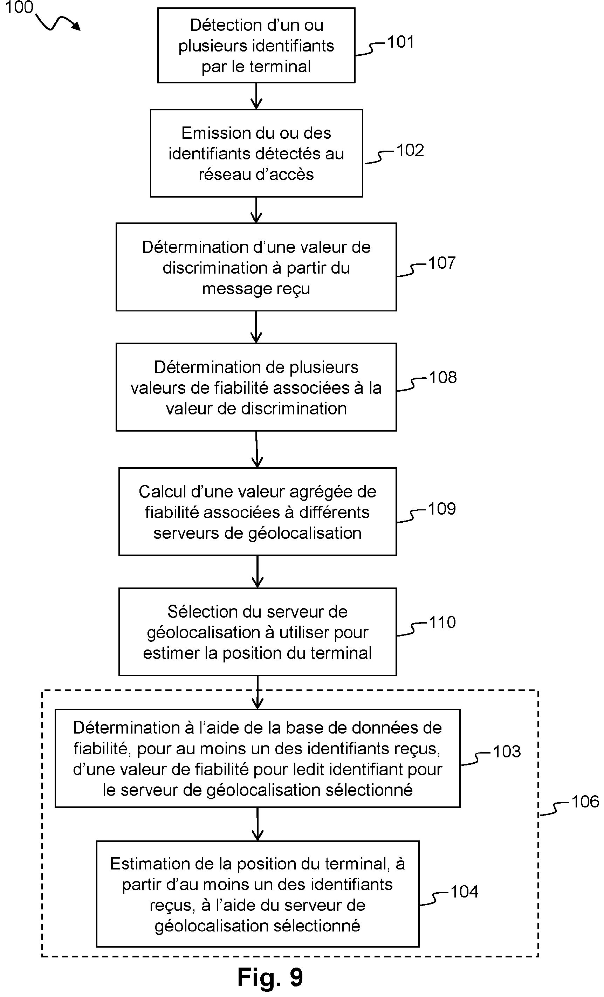

L'étape de détermination 106 de la position géographique du terminal 20 peut être mise en œuvre de différentes façons, et notamment tel que décrit précédemment en référence à la figure 4. En particulier, et tel que décrit à la figure 9, une fois que le serveur 50 de géolocalisation a été sélectionné, il est possible de sélectionner un ou plusieurs identifiants parmi les identifiants reçus du terminal 20, en fonction des valeurs de fiabilité desdits identifiants pour le serveur 50 de géolocalisation sélectionné. La position géographique du terminal 20 peut alors être estimée, à l'étape 104, à partir des identifiants sélectionnés, et à l'aide du serveur 50 de géolocalisation sélectionné.

La description ci-avant illustre clairement que, par ses différentes caractéristiques et leurs avantages, la présente invention atteint les objectifs fixés. En particulier, l'invention permet de fiabiliser la géolocalisation d'un terminal à partir d'un ou plusieurs identifiants de dispositifs émetteurs voisins. Cette fiabilisation de la géolocalisation du terminal est notamment mise en œuvre par une sélection du serveur 50 de géolocalisation à utiliser et/ou une sélection des identifiants à utiliser, grâce à l'utilisation d'une base de données renseignant sur la fiabilité d'un identifiant relativement à un serveur 50 de géolocalisation.

**Revendications**

1. Procédé (100) de géolocalisation d'un terminal (20) d'un système (10) de communication sans fil, ledit terminal (20) étant adapté à échanger des messages avec un réseau d'accès (30) dudit système (10) de communication sans fil selon un premier protocole de communication sans fil, ledit procédé comportant :

   - une détection (101), par le terminal (20), pour au moins un dispositif émetteur (40), d'un identifiant dudit dispositif émetteur (40) à partir d'un message émis par ledit dispositif émetteur (40) selon un second protocole de communication sans fil,
   - une émission (102), par le terminal (20), à destination du réseau d'accès (30), selon le premier protocole de communication sans fil, d'au moins un message comportant un ou plusieurs identifiants détectés,
   - une détermination (106), par le réseau d'accès (30), d'une position géographique du terminal (20) en émettant une requête comprenant au moins un des identifiants reçus à un serveur (50) de géolocalisation mémorisant une base de données (51) de géolocalisation comportant une liste d'identifiants de dispositifs émetteurs et les positions géographiques respectives desdits dispositifs émetteurs (40), **caractérisé en ce que** ladite requête étant définie à l'aide d'une base de données, dite « base de données (33) de fiabilité des identifiants », permettant d'associer à un identifiant quelconque au moins une valeur représentative de la fiabilité dudit identifiant pour ledit serveur (50) de géolocalisation, la base de données (33) de fiabilité des identifiants étant utilisée pour choisir le serveur (50) de géolocalisation à qui émettre la requête et/ou pour choisir les identifiants à inclure dans la requête, la base de données (33) de fiabilité des identifiants étant mémorisée par un ou plusieurs serveurs (32) distincts du serveur (50) de géolocalisation.

2. Procédé (100) de géolocalisation selon la revendication 1 dans lequel la détermination (106) de la position géographique du terminal (20) comporte :

   - une détermination (103), par le réseau d'accès (30), à l'aide de la base de données (33) de fiabilité des identifiants, pour au moins un des identifiants reçus, d'une valeur de fiabilité pour ledit identifiant,
   - lorsque ledit au moins un des identifiants reçus présente une valeur de fiabilité satisfaisante, une estimation (104) d'une position géographique du terminal (20) à partir dudit identifiant avec le serveur (50) de géolocalisation.

3. Procédé (100) de géolocalisation selon la revendication 2 dans lequel la valeur de fiabilité de chaque identifiant parmi les identifiants reçus est comparée à une valeur seuil pour déterminer si l'identifiant doit ou non être utilisé pour l'estimation (104) de la position géographique du terminal (20) à l'aide du serveur (50) de géolocalisation.

4. Procédé (200) de mise à jour d'une base de données (33) de fiabilité des identifiants telle que définie dans l'une quelconque des revendications 1 à 3, ledit procédé (200) comportant :

   - une détection (201), par un terminal (20), pour au moins un dispositif émetteur (40), d'un identifiant dudit dispositif émetteur (40) à partir d'un message émis par ledit dispositif émetteur (40) selon le second protocole de communication sans fil,
   - une émission (202), par le terminal (20), à destination du réseau d'accès (30), selon le premier protocole de communication sans fil, d'un message comportant ledit identifiant,
   - une estimation (204) d'une position géographique du terminal (20) à l'aide d'un serveur (50) de géolocalisation à partir dudit identifiant,
   - une détermination (203), sans utiliser le serveur (50) de géolocalisation, d'une position géographique approximative du terminal (20),
   - une vérification (205) de cohérence, entre la position géographique approximative du terminal (20) et la position géographique du terminal (20) estimée à l'aide du serveur (50) de géolocalisation,

- une mise à jour (206) de la base de données (33) de fiabilité des identifiants pour ledit identifiant en fonction du résultat de la vérification (205) de cohérence.

5. Procédé (200) de mise à jour selon la revendication 4 dans lequel la vérification (205) de cohérence comporte un calcul d'une distance entre la position géographique approximative du terminal (20) et la position géographique associée audit identifiant dans la base de données (51) de géolocalisation.

6. Procédé (200) de mise à jour selon l'une quelconque des revendications 4 à 5 dans lequel la mise à jour (206) comporte un calcul d'une nouvelle valeur de fiabilité en fonction d'une distance entre la position géographique approximative du terminal (20) et la position géographique associée audit identifiant dans la base de données (51) de géolocalisation.

7. Procédé (200) de mise à jour selon la revendication 6 dans lequel la nouvelle valeur de fiabilité est calculée en outre en fonction d'une valeur de fiabilité précédemment attribuée audit identifiant dans la base de données (33) de fiabilité des identifiants.

8. Serveur (32) d'un réseau d'accès (30) d'un système (10) de communication sans fil, ledit système (10) comportant au moins un terminal (20) adapté à échanger des messages avec le réseau d'accès (30) selon un premier protocole de communication sans fil et à recevoir un message émis par un dispositif émetteur (40) selon un second protocole de communication sans fil, ledit serveur (32) étant **caractérisé en ce qu'**il est configuré pour :

   - recevoir du terminal (20) au moins un message comportant au moins un identifiant d'un dispositif émetteur (40) détecté par ledit terminal (20),
   - déterminer une position géographique du terminal (20) en émettant une requête comprenant au moins un des identifiants reçus à un serveur (50) de géolocalisation mémorisant une base de données (51) de géolocalisation comportant une liste d'identifiants de dispositifs émetteurs et les positions géographiques respectives desdits dispositifs émetteurs (40), **caractérisé en ce que** ladite requête étant définie à l'aide d'une base de données, dite « base de données (33) de fiabilité des identifiants », permettant d'associer à un identifiant quelconque au moins une valeur représentative de la fiabilité dudit identifiant pour ledit serveur (50) de géolocalisation, la base de données (33) de fiabilité des identifiants étant utilisée pour choisir le serveur (50) de géolocalisation à qui émettre la requête et/ou pour choisir les identifiants à inclure dans la requête, la base de données (33) de fiabilité des identifiants étant mémorisée par un ou plusieurs serveurs (32) distincts du serveur (50) de géolocalisation.

9. Serveur (32) selon la revendication 8 configuré pour :

   - déterminer, pour au moins un des identifiants reçus, une valeur de fiabilité à l'aide de la base de données (33) de fiabilité des identifiants,
   - lorsqu'au moins un des identifiants reçus présente une valeur de fiabilité satisfaisante, estimer une position géographique du terminal (20) à partir dudit identifiant avec le serveur (50) de géolocalisation.

10. Serveur (32) selon la revendication 9, ledit serveur (32) étant en outre configuré, lorsqu'aucun des identifiants reçus ne présente une valeur de fiabilité satisfaisante, pour estimer une position géographique approximative du terminal (20) sans l'aide du serveur (50) de géolocalisation.

11. Serveur (32) selon la revendication 10, ledit serveur (32) étant en outre configuré pour estimer la position géographique approximative du terminal (20) à partir, pour au moins un des identifiants reçus, d'une position géographique approximative du dispositif émetteur (40) portant ledit identifiant, ladite position géographique approximative du dispositif émetteur (40) ayant été préalablement déterminée par le serveur (32) sans l'aide du serveur (50) de géolocalisation et mémorisée dans la base de données (33) de fiabilité des identifiants.

12. Serveur (32) selon la revendication 9, dans lequel ledit au moins un des identifiants reçus est associé, dans la base de données (33) de fiabilité des identifiants, à plusieurs valeurs de fiabilité associée chacune à une valeur différente d'une information de discrimination permettant d'identifier un serveur (50) de géolocalisation, et ledit serveur (32) est en outre configuré pour sélectionner, en fonction des différentes valeurs de fiabilité associées audit identifiant, le serveur (50) de géolocalisation à utiliser pour estimer la position géographique du terminal (20).

13. Serveur (32) selon la revendication 8, dans lequel un identifiant quelconque peut être associé, dans la base de données (33) de fiabilité des identifiants, à plusieurs valeurs de fiabilité chacune associée à une valeur différente d'une information de discrimination, et le serveur (32) est configuré pour :

- déterminer une valeur de l'information de discrimination à partir dudit au moins un message reçu du terminal (20),
- déterminer plusieurs valeurs de fiabilité associées à ladite valeur d'information de discrimination dans la base de données (33) de fiabilité des identifiants,
- calculer une valeur agrégée de fiabilité, pour chacun d'une pluralité de serveurs (50) de géolocalisation, à partir des valeurs de fiabilité ainsi déterminées,
- sélectionner le serveur (50) de géolocalisation à utiliser pour l'estimation (104) de la position géographique du terminal (20) en fonction des valeurs agrégées calculées.

14. Serveur (32) selon la revendication 8, ledit serveur (32) étant en outre configuré pour :

- déterminer une position géographique approximative du terminal (20) sans utiliser le serveur (50) de géolocalisation,
- vérifier une cohérence entre la position géographique approximative du terminal (20) et la position géographique du terminal (20) estimée à l'aide du serveur (50) de géolocalisation,
- mettre à jour la base de données (33) de fiabilité des identifiants pour au moins un des identifiants reçus en fonction du résultat de la vérification de cohérence.

15. Serveur (32) selon la revendication 14, ledit serveur (32) étant en outre configuré pour calculer, pour au moins un des identifiants reçus, une nouvelle valeur de fiabilité en fonction d'une distance entre la position géographique approximative du terminal (20) et la position géographique associée audit identifiant dans la base de données (51) de géolocalisation.

16. Réseau d'accès (30) comportant un serveur (32) selon l'une quelconque des revendications 8 à 15.

## Patentansprüche

1. Verfahren (100) zur Geolokalisierung eines Endgeräts (20) für ein Drahtloskommunikationssystem (10), wobei das Endgerät (20) geeignet ist, Nachrichten mit einem Zugangsnetzwerk (30) des Drahtloskommunikationssystems (10) gemäß einem ersten Drahtloskommunikationsprotokoll auszutauschen, wobei das Verfahren umfasst:

- Erkennen (101), durch das Endgerät (20) für mindestens eine Sendevorrichtung (40), einer Kennung der Sendevorrichtung (40) auf Grundlage einer Nachricht, die von der Sendevorrichtung (40) gemäß einem zweiten Drahtloskommunikationsprotokoll gesendet wird,
- Senden (102), durch das Endgerät (20) an das Zugangsnetzwerk (30) gemäß dem ersten Drahtloskommunikationsprotokoll, mindestens einer Nachricht, die eine oder mehrere erkannte Kennungen umfasst,
- Bestimmen (106), durch das Zugangsnetzwerk (30), einer geografischen Position des Endgeräts (20) durch Senden einer Anfrage, die mindestens eine der empfangenen Kennungen umfasst, an einen Geolokalisierungsserver (50), der eine Geolokalisierungsdatenbank (51) speichert, die eine Liste von Kennungen von Sendevorrichtungen und die jeweiligen geografischen Positionen der Sendevorrichtungen (40) umfasst, **dadurch gekennzeichnet, dass** die Anfrage mithilfe einer Datenbank definiert wird, die als "Kennungszuverlässigkeitsdatenbank (33)" bezeichnet wird, welche es ermöglicht, einer beliebigen Kennung mindestens einen Wert zuzuordnen, der für die Zuverlässigkeit der Kennung für den Geolokalisierungsserver (50) repräsentativ ist, wobei die Kennungszuverlässigkeitsdatenbank (33) verwendet wird, um den Geolokalisierungsserver (50) auszuwählen, an den die Anfrage gesendet werden soll, und/oder um die Kennungen auszuwählen, die in die Anfrage eingeschlossen werden sollen, wobei die Kennungszuverlässigkeitsdatenbank (33) von einem oder mehreren Servern (32) gespeichert wird, die vom Geolokalisierungsserver (50) getrennt sind.

2. Geolokalisierungsverfahren (100) nach Anspruch 1, wobei das Bestimmen (106) der geografischen Position des Endgeräts (20) umfasst:

- Bestimmen (103), durch das Zugangsnetzwerk (30) mithilfe der Kennungszuverlässigkeitsdatenbank (33), für mindestens eine der empfangenen Kennungen eines Zuverlässigkeitswerts für die Kennung,
- wenn die mindestens eine der empfangenen Kennungen einen zufriedenstellenden Zuverlässigkeitswert aufweist, Schätzen (104) einer geografischen Position des Endgeräts (20) auf Grundlage der Kennung mit dem Geolokalisierungsserver (50).

3. Geolokalisierungsverfahren (100) nach Anspruch 2, wobei der Zuverlässigkeitswert jeder Kennung unter den empfangenen Kennungen mit einem Schwellenwert verglichen wird, um zu bestimmen, ob die Kennung zum Schätzen (104) der geografischen Position des Endgeräts (20) mithilfe des Geolokalisierungsservers (50) verwendet werden soll oder nicht.

4. Verfahren (200) zum Aktualisieren einer Kennungszuverlässigkeitsdatenbank (33), wie in einem der Ansprüche 1 bis 3 definiert, wobei das Verfahren (200) umfasst:

- Erkennen (201), durch ein Endgerät (20), für mindestens eine Sendevorrichtung (40), einer Kennung der Sendevorrichtung (40) auf Grundlage einer Nachricht, die von der Sendevorrichtung (40) gemäß dem zweiten Drahtloskommunikationsprotokoll gesendet wird,
- Senden (202), durch das Endgerät (20) an das Zugangsnetzwerk (30) gemäß dem ersten Drahtloskommunikationsprotokoll, einer Nachricht, die die Kennung umfasst,
- Schätzen (204) einer geografischen Position des Endgeräts (20) mithilfe eines Geolokalisierungsservers (50) auf Grundlage der Kennung,
- Bestimmen (203), ohne den Geolokalisierungsserver (50) zu verwenden, einer ungefähren geografischen Position des Endgeräts (20),
- Überprüfen (205) der Kohärenz zwischen der ungefähren geografischen Position des Endgeräts (20) und der mithilfe des Geolokalisierungsservers (50) geschätzten geografischen Position des Endgeräts (20),
- Aktualisieren (206) der Kennungszuverlässigkeitsdatenbank (33) für die Kennung in Abhängigkeit vom Ergebnis der Kohärenzprüfung (205).

5. Aktualisierungsverfahren (200) nach Anspruch 4, wobei das Überprüfen (205) der Kohärenz das Berechnen einer Entfernung zwischen der ungefähren geografischen Position des Endgeräts (20) und der geografischen Position, die der Kennung in der Geolokalisierungsdatenbank (51) zugeordnet ist, umfasst.

6. Aktualisierungsverfahren (200) nach einem der Ansprüche 4 bis 5, wobei das Aktualisieren (206) das Berechnen eines neuen Zuverlässigkeitswerts in Abhängigkeit von einer Entfernung zwischen der ungefähren geografischen Position des Endgeräts (20) und der geografischen Position, die der Kennung in der Geolokalisierungsdatenbank (51) zugeordnet ist, umfasst.

7. Aktualisierungsverfahren (200) nach Anspruch 6, wobei der neue Zuverlässigkeitswert weiter in Abhängigkeit von einem Zuverlässigkeitswert berechnet wird, der der Kennung zuvor in der Kennungszuverlässigkeitsdatenbank (33) zugewiesen war.

8. Server (32) für ein Zugangsnetzwerk (30) eines Drahtloskommunikationssystems (10), wobei das System (10) mindestens ein Endgerät (20) umfasst, das geeignet ist, Nachrichten mit dem Zugangsnetzwerk (30) gemäß einem ersten Drahtloskommunikationsprotokoll auszutauschen und eine Nachricht, die von einer Sendevorrichtung (40) gemäß einem zweiten Drahtloskommunikationsprotokoll gesendet wird, zu empfangen, wobei der Server (32) **dadurch gekennzeichnet ist, dass** er dafür konfiguriert ist:

- vom Endgerät (20) mindestens eine Nachricht zu empfangen, die mindestens eine Kennung einer Sendevorrichtung (40), die von dem Endgerät (20) erkannt wurde, umfasst,
- eine geografische Position des Endgeräts (20) zu bestimmen durch Senden einer Anfrage, die mindestens eine der empfangenen Kennungen umfasst, an einen Geolokalisierungsserver (50), der eine Geolokalisierungsdatenbank (51) speichert, die eine Liste von Kennungen von Sendevorrichtungen und die jeweiligen geografischen Positionen der Sendevorrichtungen (40) umfasst, **dadurch gekennzeichnet, dass** die Anfrage mithilfe einer Datenbank definiert wird, die als "Kennungszuverlässigkeitsdatenbank (33)" bezeichnet wird, welche es ermöglicht, einer beliebigen Kennung mindestens einen Wert zuzuordnen, der für die Zuverlässigkeit der Kennung für den Geolokalisierungsserver (50) repräsentativ ist, wobei die Kennungszuverlässigkeitsdatenbank (33) verwendet wird, um den Geolokalisierungsserver (50) auszuwählen, an den die Anfrage gesendet werden soll, und/oder um die Kennungen auszuwählen, die in die Anfrage eingeschlossen werden sollen, wobei die Kennungszuverlässigkeitsdatenbank (33) von einem oder mehreren Servern (32) gespeichert wird, die vom Geolokalisierungsserver (50) getrennt sind.

9. Server (32) nach Anspruch 8, der dafür konfiguriert ist:

- für mindestens eine der empfangenen Kennungen mithilfe der Kennungszuverlässigkeitsdatenbank (33) einen Zuverlässigkeitswert zu bestimmen,
- wenn mindestens eine der empfangenen Kennungen einen zufriedenstellenden Zuverlässigkeitswert aufweist, eine geografische Position des Endgeräts (20) auf Grundlage der Kennung mit dem Geolokalisierungsserver (50) zu schätzen.

10. Server (32) nach Anspruch 9, wobei der Server (32) weiter dafür konfiguriert ist, wenn keine der empfangenen Kennungen einen zufriedenstellenden Zuverlässigkeitswert aufweist, eine ungefähre geografische Position des Endgeräts (20) ohne Hilfe des Geolokalisierungsservers (50) zu schätzen.

11. Server (32) nach Anspruch 10, wobei der Server (32) weiter dafür konfiguriert ist, für mindestens eine der empfangenen Kennungen die ungefähre geografische Position des Endgeräts (20) auf Grundlage einer ungefähren geografischen Position der Sendevorrichtung (40), die die Kennung trägt, zu schätzen, wobei die ungefähre geografische Position der Sendevorrichtung (40) zuvor vom Server (32) ohne Hilfe des Geolokalisierungservers (50) bestimmt und in der Kennungszuverlässigkeitsdatenbank (33) gespeichert wurde.

12. Server (32) nach Anspruch 9, wobei die mindestens eine der empfangenen Kennungen in der Kennungszuverlässigkeitsdatenbank (33) mehreren Zuverlässigkeitswerten zugeordnet ist, die jeweils einem unterschiedlichen Wert einer Unterscheidungsinformation zugeordnet sind, welche es ermöglicht, einen Geolokalisierungsserver (50) zu identifizieren, und der Server (32) weiter dafür konfiguriert ist, in Abhängigkeit von den unterschiedlichen Zuverlässigkeitswerten, die der Kennung zugeordnet sind, den Geolokalisierungsserver (50) auszuwählen, der verwendet werden soll, um die geografische Position des Endgeräts (20) zu schätzen.

13. Server (32) nach Anspruch 8, wobei eine beliebige Kennung in der Kennungszuverlässigkeitsdatenbank (33) mehreren Zuverlässigkeitswerten zugeordnet sein kann, die jeweils einem unterschiedlichen Wert einer Unterscheidungsinformation zugeordnet sind, und der Server (32) dafür konfiguriert ist:

- einen Wert der Unterscheidungsinformation auf Grundlage der mindestens einen Nachricht, die vom Endgerät (20) empfangen wurde, zu bestimmen,
- mehrere Zuverlässigkeitswerte zu bestimmen, die dem Wert der Unterscheidungsinformation in der Kennungszuverlässigkeitsdatenbank (33) zugeordnet sind,
- einen aggregierten Zuverlässigkeitswert für jeden einer Vielzahl von Geolokalisierungsservern (50) auf Grundlage der so bestimmten Zuverlässigkeitswerte zu berechnen,
- den Geolokalisierungsserver (50), der zum Schätzen (104) der geografischen Position des Endgeräts (20) verwendet werden soll, in Abhängigkeit von den berechneten aggregierten Werten auszuwählen.

14. Server (32) nach Anspruch 8, wobei der Server (32) weiter dafür konfiguriert ist:

- eine ungefähre geografische Position des Endgeräts (20) zu bestimmen, ohne den Geolokalisierungsserver (50) zu verwenden,
- eine Kohärenz zwischen der ungefähren geografischen Position des Endgeräts (20) und der mit Hilfe des Geolokalisierungsservers (50) geschätzten geografischen Position des Endgeräts (20) zu überprüfen,
- die Kennungszuverlässigkeitsdatenbank (33) für mindestens eine der empfangenen Kennungen in Abhängigkeit vom Ergebnis der Kohärenzprüfung zu aktualisieren.

15. Server (32) nach Anspruch 14, wobei der Server (32) weiter dafür konfiguriert ist, für mindestens eine der empfangenen Kennungen einen neuen Zuverlässigkeitswert in Abhängigkeit von einer Entfernung zwischen der ungefähren geografischen Position des Endgeräts (20) und der geografischen Position, die der Kennung in der Geolokalisierungsdatenbank (51) zugeordnet ist, zu berechnen.

16. Zugangsnetzwerk (30) mit einem Server (32) nach einem der Ansprüche 8 bis 15.

**Claims**

1. Method (100) for geolocating a terminal (20) of a wireless communication system (10), said terminal (20) being adapted to exchange messages with an access network (30) of said wireless communication system (10) according to a first wireless communication protocol, said method including:

- detecting (101), by the terminal (20), for at least one transmitting device (40), an identifier of said transmitting device (40) based on a message transmitted by said transmitting device (40) according to a second wireless communication protocol,

- transmitting (102), by the terminal (20), to the access network (30), according to the first wireless communication protocol, at least one message including one or more detected identifiers,

- determining (106), by the access network (30), a geographical position of the terminal (20) by transmitting a request comprising at least one of the received identifiers to a geolocation server (50) storing a geolocation database (51) including a list of identifiers of transmitting devices and the respective geographical positions of said transmitting devices (40), **characterized in that** said request being defined using a database, known as "identifier reliability database (33)", making it possible to associate with any identifier at least one value representative of the reliability of said identifier for said geolocation server (50), the identifier reliability database (33) being used to select the geolocation server (50) to which to send the request and/or to select the identifiers to be included in the request, the identifier reliability database (33) being stored by one or more servers (32) different from the geolocation server (50).

2. Geolocation method (100) according to claim 1 wherein determining (106) the geographical position of the terminal (20) includes:

- determining (103), by the access network (30), using the identifier reliability database (33), for at least one of the received identifiers, a reliability value for said identifier,

- when said at least one of the received identifiers has a satisfactory reliability value, estimating (104) a geographical position of the terminal (20) based on said identifier with the geolocation server (50).

3. Geolocation method (100) according to claim 2 wherein the reliability value of each identifier from the received identifiers is compared with a threshold value to determine whether or not the identifier must be used for estimating (104) the geographical position of the terminal (20) using the geolocation server (50).

4. Method (200) for updating an identifier reliability database (33) such as defined in any one of claims 1 to 3, said method (200) including:

- detecting (201), by a terminal (20), for at least one transmitting device (40), an identifier of said transmitting device (40) based on a message transmitted by said transmitting device (40) according to the second wireless communication protocol,

- transmitting (202), by the terminal (20), to the access network (30), according to the first wireless communication protocol, a message including said identifier,

- estimating (204) a geographical position of the terminal (20) using a geolocation server (50) based on said identifier,

- determining (203), without using the geolocation server (50), an approximate geographical position of the terminal (20),

- checking (205) the consistency, between the approximate geographical position of the terminal (20) and the estimated geographical position of the terminal (20) using the geolocation server (50),

- updating (206) the identifier reliability database (33) for said identifier depending on the result of the consistency check (205).

5. Update method (200) according to claim 4 wherein the consistency check (205) includes calculating a distance between the approximate geographical position of the terminal (20) and the geographical position associated with said identifier in the geolocation database (51).

6. Update method (200) according to any one of claims 4 to 5 wherein the update (206) includes calculating a new reliability value depending on a distance between the approximate geographical position of the terminal (20) and the geographical position associated with said identifier in the geolocation database (51).

7. Update method (200) according to claim 6 wherein the new reliability value is further calculated depending on a reliability value previously attributed to said identifier in the identifier reliability database (33).

8. Server (32) of an access network (30) of a wireless communication system (10), said system (10) including at least one terminal (20) adapted to exchange messages with the access network (30) according to a first wireless communication protocol and to receive a message transmitted by a transmitting device (40) according to a second wireless communication protocol, said server (32) being **characterised in that** it is configured to:

- receive from the terminal (20) at least one message including at least one identifier of a transmitting device (40) detected by said terminal (20),
- determine a geographical position of the terminal (20) by transmitting a request comprising at least one of the received identifiers to a geolocation server (50) storing a geolocation database (51) including a list of identifiers of transmitting devices and the respective geographical positions of said transmitting devices (40), **characterized in that** said request being defined using a database, known as "identifier reliability database (33)", making it possible to associate with any identifier at least one value representative of the reliability of said identifier for said geolocation server (50), the identifier reliability database (33) being used to select the geolocation server (50) to which to send the request and/or to select the identifiers to be included in the request, the identifier reliability database (33) being stored by one or more servers (32) different from the geolocation server (50).

9. Server (32) according to claim 8 configured to:

- determine, for at least one of the received identifiers, a reliability value using the identifier reliability database (33),
- when at least one of the received identifiers has a satisfactory reliability value, estimate a geographical position of the terminal (20) based on said identifier with the geolocation server (50).

10. Server (32) according to claim 9, said server (32) further being configured, when none of the received identifiers has a satisfactory reliability value, to estimate an approximate geographical position of the terminal (20) without using the geolocation server (50).

11. Server (32) according to claim 10, said server (32) further being configured to estimate the approximate geographical position of the terminal (20) based on, for at least one of the received identifiers, an approximate geographical position of the transmitting device (40) carrying said identifier, said approximate geographical position of the transmitting device (40) having been previously determined by the server (32) without using the geolocation server (50) and stored in the identifier reliability database (33).

12. Server (32) according to claim 9, wherein said at least one of the received identifiers is associated, in the identifier reliability database (33), with a plurality of reliability values each associated with a different value of discrimination information making it possible to identify a geolocation server (50), and said server (32) is further configured to select, depending on the various reliability values associated with said identifier, the geolocation server (50) to be used for estimating the geographical position of the terminal (20).

13. Server (32) according to claim 8, wherein any identifier may be associated, in the identifier reliability database (33), with a plurality of reliability values each associated with a different value of discrimination information, and the server (32) is configured to:

- determine a value of the discrimination information based on said at least one message received from the terminal (20),
- determine a plurality of reliability values associated with said discrimination information value in the identifier reliability database (33),
- calculate an aggregated reliability value, for each one of a plurality of geolocation servers (50), based on the reliability values thus determined,
- select the geolocation server (50) to be used for estimating (104) the geographical position of the terminal (20) depending on the calculated aggregated values.

14. Server (32) according to claim 8, said server (32) further being configured to:

- determine an approximate geographical position of the terminal (20) without using the geolocation server (50),
- check a consistency between the approximate geographical position of the terminal (20) and the estimated geographical position of the terminal (20) using the geolocation server (50),
- update the identifier reliability database (33) for at least one of the received identifiers depending on the result of the consistency check.

15. Server (32) according to claim 14, said server (32) further being configured to calculate, for at least one of the received identifiers, a new reliability value depending on a distance between the approximate geographical position of the terminal (20) and the geographical position associated with said identifier in the geolocation database (51).

16. Access network (30) including a server (32) according to any one of claims 8 to 15.

**Fig. 1**

**Fig. 2**

100

```
         ┌─────────────────────────┐
         │   Détection d'un ou      │
         │   plusieurs identifiants │  ⌇ 101
         │   par le terminal        │
         └─────────────────────────┘
                     │
                     ▼
         ┌─────────────────────────┐
         │   Emission du ou des     │
         │   identifiants détectés au│  ⌇ 102
         │   réseau d'accès         │
         └─────────────────────────┘
                     │
                     ▼
  ┌──────────────────────────────────────┐
  │  Détermination de la position du terminal,│
  │  à partir d'au moins un des identifiants │  ⌇ 106
  │  reçus, à l'aide d'un serveur de         │
  │  géolocalisation et d'une base de        │
  │  données de fiabilité                    │
  └──────────────────────────────────────┘
```

## Fig. 3

100

Détection d'un ou plusieurs identifiants par le terminal — 101

Transmission du ou des identifiants détectés au réseau d'accès — 102

106

Détermination à l'aide de la base de données de fiabilité, pour au moins un des identifiants reçus, d'une valeur de fiabilité pour ledit identifiant — 103

Est-ce qu'au moins un des identifiants présente une valeur de fiabilité satisfaisante ?

Oui          Non          105

Estimation de la position du terminal en fonction des valeurs de fiabilité déterminées et à l'aide du serveur de géolocalisation — 104

Estimation d'une position approximative du terminal sans l'aide du serveur de géolocalisation

**Fig. 4**

**Fig. 5**

33

| Index | C1 | C2 | ... | CK | ID | Score |
|-------|----|----|-----|----|----|-------|
| 1 | | | | | | |
| 2 | | | | | | |
| ⋮ | | | | | | |
| N | | | | | | |

**Fig. 6**

200

Détection d'un identifiant
par le terminal ⌐201

↓

Emission de l'identifiant
détecté au réseau
d'accès ⌐202

Détermination d'une
position approximative du
terminal sans utiliser le
serveur de géolocalisation ⌐203

Estimation d'une position
du terminal à l'aide du
serveur de géolocalisation ⌐204

Vérification de cohérence entre la
position approximative du terminal
et la position estimée à l'aide du
serveur de géolocalisation ⌐205

↓

Mise à jour de la base de données
de fiabilité des identifiants en
fonction du résultat de la vérification
de cohérence ⌐206

## Fig. 7

100

Détection d'un ou plusieurs identifiants par le terminal ⟿ 101

Emission du ou des identifiants détectés au réseau d'accès ⟿ 102

Détermination d'une valeur de discrimination à partir du message reçu ⟿ 107

Détermination de plusieurs valeurs de fiabilité associées à la valeur de discrimination ⟿ 108

Calcul d'une valeur agrégée de fiabilité associées à différents serveurs de géolocalisation ⟿ 109

Sélection du serveur de géolocalisation à utiliser pour estimer la position du terminal ⟿ 110

Détermination de la position du terminal, à partir d'au moins un des identifiants reçus, à l'aide du serveur de géolocalisation sélectionné ⟿ 106

## Fig. 8

100

```
┌─────────────────────────┐
│   Détection d'un ou      │
│  plusieurs identifiants  │ ⌐101
│     par le terminal      │
└─────────────────────────┘
            │
            ▼
┌─────────────────────────┐
│   Emission du ou des     │
│  identifiants détectés au│ ⌐102
│     réseau d'accès       │
└─────────────────────────┘
            │
            ▼
┌─────────────────────────┐
│  Détermination d'une     │
│  valeur de discrimination│ ⌐107
│  à partir du message reçu │
└─────────────────────────┘
            │
            ▼
┌─────────────────────────┐
│  Détermination de        │
│  plusieurs valeurs de    │ ⌐108
│  fiabilité associées à la│
│  valeur de discrimination│
└─────────────────────────┘
            │
            ▼
┌─────────────────────────┐
│  Calcul d'une valeur     │
│  agrégée de fiabilité    │ ⌐109
│  associées à différents  │
│  serveurs de             │
│  géolocalisation         │
└─────────────────────────┘
            │
            ▼
┌─────────────────────────┐
│  Sélection du serveur de │
│  géolocalisation à       │ ⌐110
│  utiliser pour estimer la│
│  position du terminal    │
└─────────────────────────┘
            │
            ▼
```

┌ ─ ─ ─ ─ ─ ─ ─ ─ ─ ─ ─ ─ ─ ─ ─ ─ ─ ─ ─ ─ ┐
│ ┌───────────────────────────────────┐ │
│ │ Détermination à l'aide de la base │ │
│ │ de données de fiabilité, pour au  │ │ ⌐103
│ │ moins un des identifiants reçus,  │ │
│ │ d'une valeur de fiabilité pour    │ │       ⌐106
│ │ ledit identifiant pour le serveur │ │
│ │ de géolocalisation sélectionné    │ │
│ └───────────────────────────────────┘ │
│                  │                     │
│                  ▼                     │
│ ┌───────────────────────────────────┐ │
│ │ Estimation de la position du      │ │
│ │ terminal, à partir d'au moins un  │ │ ⌐104
│ │ des identifiants reçus, à l'aide  │ │
│ │ du serveur de géolocalisation     │ │
│ │ sélectionné                       │ │
│ └───────────────────────────────────┘ │
└ ─ ─ ─ ─ ─ ─ ─ ─ ─ ─ ─ ─ ─ ─ ─ ─ ─ ─ ─ ─ ┘

# Fig. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011250903 A